# EUROPEAN PATENT APPLICATION

(11) **EP 4 311 365 A1**
(43) Date of publication of application: **24.01.2024**
(21) Application number: 22770310.5
(22) Date of filing: 03.03.2022
(51) Int. Cl.: H04W 76/11, H04W 76/12

(54) **INFORMATION PROCESSING METHOD AND APPARATUS, DEVICE, AND STORAGE MEDIUM**

(30) Priority: 18.03.2021 CN 202110292912
(71) Applicant: ZTE Corporation, Shenzhen, Guangdong 518057 (CN)
(72) Inventor: LIU, Hanchao, Shenzhen, Guangdong 518057 (CN); XIE, Feng, Shenzhen, Guangdong 518057 (CN)
(74) Representative: Tiburzi, Andrea
(86) International application number: PCT/CN2022/079098
(87) International publication number: WO 2022/193955

(57) **Abstract**

Provided are an information processing method, apparatus, and device and a storage medium. The method includes: receiving first configuration information sent by a second communication node; and determining, based on the first configuration information, a correspondence between a logical channel identifier, LCID, and a media access control control element, MAC CE, type.

## Description

### TECHNICAL FIELD

The present application relates to the technical field of communications, for example, an information processing method, apparatus, and device and a storage medium.

### BACKGROUND

In the current communication standards, each media access control control element (MAC CE) type always corresponds to one logical channel identifier (LCID). With an increase of a MAC CE type, a new LCID needs to be allocated to a newly added MAC CE. If all of existing LCIDs have been allocated, a new LCID value needs to be added. As a result, LCIDs represent MAC CE types with relatively low efficiency, which is not conducive to the forward compatibility of a system. Meanwhile, it is also possible that the length of an LCID field is increased, increasing the transmission overheads of a media access control protocol data unit (MAC PDU).

### SUMMARY

The present application provides an information processing method, apparatus, and device and a storage medium, thereby reducing the transmission overheads of a MAC PDU, improving the efficiency with which LCIDs represent MAC CE types, and facilitating the forward compatibility of a system.

In the first aspect, an embodiment of the present application provides an information processing method. The method is applied by a first communication node and includes the steps below. First configuration information sent by a second communication node is received.

A correspondence between an LCID and a MAC CE type is determined based on the first configuration information.

In the second aspect, an embodiment of the present application provides an information processing method. The method is applied by a second communication node and includes the steps below.

First configuration information is sent to a first communication node.

An LCID is sent to the first communication node so that the first communication node determines, based on the LCID and the first configuration information, a MAC CE type corresponding to the LCID.

In the third aspect, an embodiment of the present application provides an information processing apparatus. The apparatus is configured in a first communication node and includes a receiving module and a determination module.

The receiving module is configured to receive first configuration information sent by a second communication node.

The determination module is configured to determine, based on the first configuration information, a correspondence between an LCID and a MAC CE type.

In the fourth aspect, an embodiment of the present application provides an information processing apparatus. The apparatus is configured in a second communication node and includes a sending module.

The sending module is configured to send first configuration information to a first communication node and send an LCID to the first communication node so that the first communication node determines, based on the LCID and the first configuration information, a MAC CE type corresponding to the LCID.

In the fifth aspect, an embodiment of the present application provides an information processing device. The device includes one or more processors and a memory.

The memory is configured to store one or more programs.

The one or more programs, when executed by the one or more processors, cause the one or more processors to perform any one of the methods according to embodiments of the present application.

In the sixth aspect, an embodiment of the present application provides a storage medium. The storage medium is configured to store a computer program which, when executed by a processor, causes the processor to perform any one of the methods according to embodiments of the present application.

### BRIEF DESCRIPTION OF DRAWINGS

FIG. 1 is a schematic diagram of a 5G DL MAC PDU according to an embodiment of the present application.
FIG. 2 is a schematic diagram of a 5G UL MAC PDU according to an embodiment of the present application.
FIG. 3 is a schematic diagram of a 4G MAC PDU according to an embodiment of the present application.
FIG. 4 is a flowchart of an information processing method according to an embodiment of the present application.
FIG. 5 is a flowchart of an information processing method according to an embodiment of the present application.
FIG. 6 is a flowchart in which a MAC CE type is determined according to first configuration information including a correspondence between an LCID and a MAC CE type according to an embodiment of the present application.
FIG. 7 is a flowchart in which a MAC CE type is determined according to first configuration information including a MAC CE type corresponding to an LCID according to an embodiment of the present application.
FIG. 8 is a flowchart in which a received MAC CE type is determined according to an LCID value corresponding to a MAC CE type under a radio resource configuration according to an embodiment of the present application.
FIG. 9 is a flowchart in which the length of an LCID field is determined according to the number of LCIDs configured for a first communication node according to an embodiment of the present application.
FIG. 10 is a flowchart in which whether the content corresponding to a received LCID is padding is determined according to configuration information including a correspondence between an LCID and the padding according to an embodiment of the present application.
FIG. 11 is a structure diagram of an information processing apparatus according to an embodiment of the present application.
FIG. 12 is a structure diagram of an information processing apparatus according to an embodiment of the present application.
FIG. 13 is a structure diagram of an information processing device according to an embodiment of the present application.

### DETAILED DESCRIPTION

Hereinafter embodiments of the present application are described in detail in conjunction with the drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described herein in some cases.

Technical solutions of the present application may be applied to such communications systems as Global Systems for Mobile Communications (GSMs), code-division multiple access (CDMA) systems, wideband code-division multiple access (WCDMA) systems, General Packet Radio Services (GPRSs), Long Term Evolution (LTE) systems, Long Term Evolution Advanced (LTE-A) systems, Universal Mobile Telecommunications Systems (UMTSs), and the 5th generation wireless systems (5G), which are not limited in the embodiments of the present application. In the present application, a 5G system is used as an example.

In the embodiments of the present application, a base station may be a device capable of communicating with a user terminal. The base station may be any device having a radio transceiving function. The base station includes, but is not limited to, a NodeB, an evolved NodeB (eNodeB), a base station in a 5G communication system, a base station in a future communication system, an access node in a Wi-Fi system, a wireless relay node, and a wireless backhaul node. The base station may also be a radio controller in a Cloud Radio Access Network (C-RAN). The base station may also be a small station and a transmission reception point (TRP), which is not limited in the embodiments of the present application. In the present application, a 5G base station is used as an example.

In the embodiments of the present application, the user terminal is a device having a radio transceiving function, which may be deployed on land, including an indoor or outdoor device, a handheld device, a wearable device, or an in-vehicle device, may be deployed on water (such as a ship), or may be deployed in the air (such as an airplane, a balloon, and a satellite). The user terminal may be a mobile phone, a Pad, a computer with a radio transceiving function, a virtual reality (VR) terminal, an augmented reality (AR) terminal, a wireless terminal in industrial control, a wireless terminal in self-driving, a wireless terminal in remote medical services, a wireless terminal in a smart grid, a wireless terminal in transportation safety, a wireless terminal in a smart city, and a wireless terminal in smart home. Application scenarios are not limited in the embodiments of the present application. The user terminal may sometimes be referred to as a terminal, an access terminal, a user equipment (UE) unit, a UE station, a mobile station, a mobile platform, a remote station, a remote terminal, a mobile device, a UE terminal, a wireless communication device, a UE agent, or a UE apparatus. This is not limited in the embodiments of the present application.

In a wireless communication system, to ensure wireless communication between different communication nodes, data and signaling need to be transmitted between the different communication nodes. A MAC PDU is a carrier for MAC layer data and signaling transmission between different communication nodes.

In the wireless communication standards of the 5th generation mobile networks (5G), one MAC PDU may include one or more MAC subPDUs, and one MAC subPDU includes one of: only one MAC subheader (including padding); one MAC subheader and one MAC service data unit (SDU); one MAC subheader and one MAC CE; or one MAC subheader and padding.

Each MAC subheader corresponds to one MAC SDU, one MAC CE, or one padding. Each MAC subheader includes one LCID.

The MAC subheader for a fixed-sized MAC CE, the MAC subheader for the padding, and a MAC subheader carrying an uplink common control channel (UL CCCH) are each composed of R/LCID, and in other cases, the MAC subheader is composed of R/F/LCID/L.

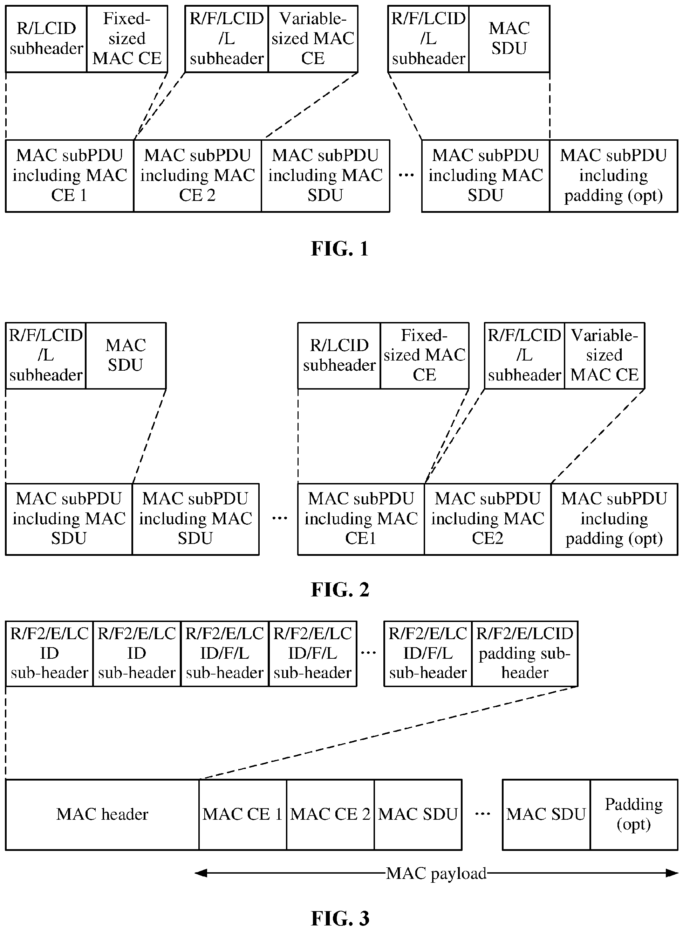

In the MAC PDU, MAC CEs concentrate. As shown in FIG. 1, downlink (DL) MAC is placed before a MAC subPDU corresponding to the MAC SDU and a MAC subPDU corresponding to the padding. As shown in FIG. 2, uplink (UL) MAC is placed after MAC subPDUs corresponding to all MAC SDUs and before the MAC subPDU corresponding to the padding.

The MAC subheader is composed of the fields below.

LCID denotes an LCID field for confirming a logical channel instance corresponding to the MAC SDU, a MAC CE type, or the padding. Each MAC subheader has only one LCID. The LCID field has a fixed length of 6 bits.

L denotes a length field for indicating the length of the MAC SDU or the length of a variable-sized MAC CE, and the unit of L is Byte.

F denotes a format field for indicating a size of the length field.

R denotes a reserved field.

LCID values corresponding to a downlink shared channel (DL-SCH) are described in Table 1, and LCID values corresponding to an uplink shared channel (UL-SCH) are described in Table 2.

**Table 1**

| Index | LCID values |
|---|---|
| 0 | CCCH |
| 1-32 | Identity of the logical channel |
| 33-46 | Reserved |
| 47 | Recommended bit rate |
| 48 | Semi-persistent zero power channel state information reference signal (SP ZP CSI-RS) Resource Set Activation/Deactivation |
| 49 | Physical uplink control channel (PUCCH) spatial relation Activation/Deactivation |
| 50 | Semi-persistent sounding reference signal (SP SRS) Activation/Deactivation |
| 51 | Semi-persistent channel state information (SP CSI) reporting on PUCCH Activation/Deactivation |
| 52 | Transmission configuration indication (TCI) State Indication for UE-specific physical downlink control channel (PDCCH) |
| 53 | TCI States Activation/Deactivation for UE-specific physical downlink shared channel (PDSCH) |
| 54 | Aperiodic CSI Trigger State Subselection |
| 55 | SP CSI-RS/CSI interference measurement (CSI-IM) Resource Set Activation/Deactivation |
| 56 | Duplication Activation/Deactivation |
| 57 | Secondary cell (SCell) |
| | Activation/Deactivation (four octets) |
| 58 | SCell Activation/Deactivation (one octet) |
| 59 | Long discontinuous reception (DRX) Command |
| 60 | DRX Command |
| 61 | Timing Advance Command |
| 62 | UE Contention Resolution Identity |
| 63 | Padding |

**Table 2**

| Index | LCID values |
|---|---|
| 0 | CCCH of size 64 bits (referred to as "CCCH1" in TS 38.331 [5]) |
| 1-32 | Identity of the logical channel |
| 33-51 | Reserved |
| 52 | CCCH of size 48 bits (referred to as "CCCH" in TS 38.331 [5]) |
| 53 | Recommended bit rate query |
| 54 | Multiple Entry power headroom report (PHR) (four octets Ci) |
| 55 | Configured Grant Confirmation |
| 56 | Multiple Entry PHR (one octet Cᵢ) |
| 57 | Single Entry PHR |
| 58 | Cell radio network temporary identifier (C-RNTI) |
| 59 | Short Truncated buffer status report (BSR) |
| 60 | Long Truncated BSR |
| 61 | Short BSR |
| 62 | Long BSR |
| 63 | Padding |

In the wireless communication standards of 4G, one MAC PDU is composed of one MAC header, zero or more MAC SDUs, zero or more MAC CEs, and padding existing selectively.

One MAC PDU header includes one or more MAC PDU subheaders, and each subheader corresponds to one MAC SDU, one MAC CE, or the padding.

The MAC PDU subheader is composed of a header field R/F2/E/LCID/(R/R/eLCID)/(F)/(L). An LCID field has a fixed length of 5 bits, and an eLCID field has a fixed length of 6 bits.

In the MAC PDU, the MAC subheaders, the MAC SDU, the MAC CE, and the padding are sorted as shown in FIG. 3.

LCID values corresponding to the DL-SCH are described in Table 3, and LCID values corresponding to the UL-SCH are described in Table 4.

**Table 3**

| Codepoint/Index | LCID values |
|---|---|
| 00000 | CCCH |
| 00001-01010 | Identity of the logical channel |
| 01011-01111 | Reserved |
| 10000 | Extended logical channel ID field |
| 10001 | Reserved |
| 10010 | Activation/Deactivation of Packet Data Convergence Protocol (PDCP) Duplication |
| 10011 | Hibernation (1 octet) |
| 10100 | Hibernation (4 octets) |
| 10101 | Activation/Deactivation of CSI-RS |
| 10110 | Recommended bit rate |
| 10111 | SC-PTM Stop Indication |
| 11000 | Activation/Deactivation (4 octets) |
| 11001 | SC-MCCH, SC-MTCH (see note) |
| 11010 | Long DRX Command |
| 11011 | Activation/Deactivation (1 octet) |
| 11100 | UE Contention Resolution Identity |
| 11101 | Timing Advance Command |
| 11110 | DRX Command |
| 11111 | Padding |

**Table 4**

| Codepoint/Index | LCID values |
|---|---|
| 00000 | CCCH |
| 00001-01010 | Identity of the logical channel |
| 01011 | CCCH |
| 01100 | CCCH |
| 01101 | CCCH and Extended Power Headroom Report |
| 01110-01111 | Reserved |
| 10000 | Extended logical channel ID field |
| 10001 | Reserved |
| 10010 | AUL confirmation (4 octets) |
| 10011 | AUL confirmation (1 octet) |
| 10100 | Recommended bit rate query |
| 10101 | SPS confirmation |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

In the current communication standards, each MAC CE type always corresponds to one LCID. With an increase of a MAC CE type, a new LCID needs to be allocated to a newly added MAC CE. If existing LCIDs have been allocated, a new LCID value needs to be added. As a result, LCIDs represent MAC CE types with relatively low efficiency, which is not conducive to the forward compatibility of a system. Meanwhile, it is also possible that the length of the LCID field is increased, increasing the transmission overheads of the MAC PDU.

To solve the preceding problem, embodiments of the present application provide an information processing method, apparatus, and device and a storage medium, thereby reducing the transmission overheads of the MAC PDU, improving the efficiency with which LCIDs represent MAC CE types, and facilitating the forward compatibility of the system.

In one embodiment, an embodiment of the present application provides an information processing method. The method may be performed by an information processing apparatus which may be implemented by software and/or hardware. The information processing method is applied by a first communication node. The first communication node may be any one of the preceding terminals, which is not limited in this embodiment.

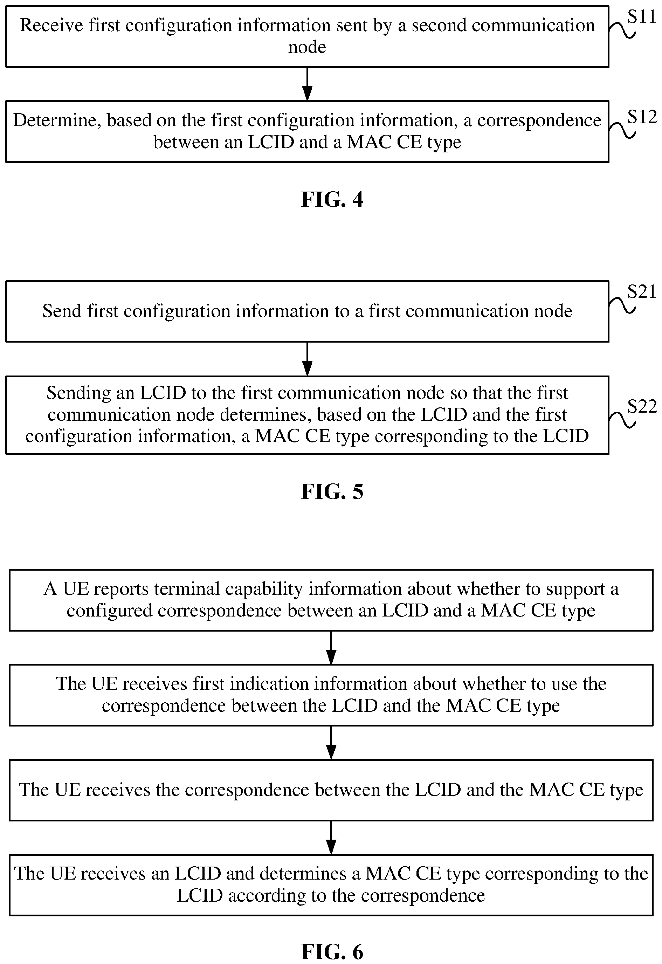

As shown in FIG. 4, the information processing method provided by the embodiment of the present application mainly includes S11 and S12.

In S 11, first configuration information sent by a second communication node is received.

In S12, a correspondence between an LCID and a MAC CE type is determined based on the first configuration information.

In an embodiment, the information processing method further includes the steps below. An LCID sent by the second communication node is received.

A MAC CE type corresponding to the LCID is determined based on the LCID and the first configuration information.

In an embodiment, the first configuration information includes the correspondence between the LCID and the MAC CE type.

In an embodiment, the step in which the MAC CE type corresponding to the LCID is determined based on the LCID and the first configuration information includes the step below.

The MAC CE type corresponding to the LCID is determined based on the LCID and the correspondence between the LCID and the MAC CE type.

In this embodiment, the first communication node receives the first configuration information delivered by the second communication node and including the correspondence between the LCID and the MAC CE type. The first communication node receives an LCID in a MAC subheader in a MAC PDU delivered by the second communication node and determines whether the MAC PDU includes a MAC CE. If the MAC PDU does not include the MAC CE, the first communication node does not need to process the MAC CE.

If the MAC PDU includes the MAC CE, a MAC CE type included in the MAC PDU is determined according to the previously received correspondence between the LCID and the MAC CE. The content in the MAC CE is demodulated according to the received MAC CE type, and a behavior indicated in the MAC CE is performed.

In an embodiment, the correspondence between the LCID and the MAC CE type is configured by a radio resource control information element (RRC IE), and a corresponding LCID value is configured for a MAC CE type configured for the first communication node.

The first configuration information includes, but is not limited to, a list.

Each element in the list is mainly composed of two parts: the first part indicates the MAC CE type and the second part indicates the LCID value. A correspondence is established between the MAC CE type and the LCID value indicated in the same element.

The list of the correspondence between the LCID and the MAC CE type:: = SEQUENCE (SIZE (1..the maximum number of elements in the list)) OF the correspondence between the LCID and the MAC CE type.

The correspondence between the LCID and the MAC CE type:: = SEQUENCE { MAC CE type ENUMERATED { Timing Advance Command, DRX Command, .... } LCID value INTEGER (0..63) }

For example, the list of the correspondence between the LCID and the MAC CE type:: = SEQUENCE {a correspondence 1 between the LCID and the MAC CE type, a correspondence 2 between the LCID and the MAC CE type}.

The correspondence 1 between the LCID and the MAC CE type:: = SEQUENCE { MAC CE type Timing Advance Command LCID value 47 }

The correspondence 2 between the LCID and the MAC CE type:: = SEQUENCE { MAC CE type DRX Command LCID value 48 }

This indicates that the LCID value for a Timing Advance Command MAC CE is 47, and the LCID value for a DRX Command MAC CE is 48.

Alternatively, the correspondence between the LCID and the MAC CE type is mainly composed of two parts: the first part is a list of MAC CE types and the second part is a list of LCIDs. The two lists have the same number of elements, and elements in the two lists have a one-to-one correspondence. The first element in the first list corresponds to the first element in the second list, the second element in the first list corresponds to the second element in the second list, and so on.

The correspondence between the LCID and the MAC CE type:: = SEQUENCE { the list of MAC CE types:: = SEQUENCE (SIZE (1..the maximum number of elements in the list)) OF the MAC CE type the list of LCIDs:: = SEQUENCE (SIZE (1..the maximum number of elements in the list)) OF the LCID }

For example, the correspondence between the LCID and the MAC CE type:: = SEQUENCE { the list of MAC CE types:: = SEQUENCE {SP SRS Activation/Deactivation, Duplication Activation/Deactivation} the list of LCIDs:: = SEQUENCE {51, 52} }

This indicates that the LCID value for an SP SRS Activation/Deactivation MAC CE is 51, and the LCID value for a Duplication Activation/Deactivation MAC CE is 52.

In an embodiment, before the first configuration information sent by the second communication node is received, the method further includes the steps below.

Second configuration information sent by the second communication node is received, where the second configuration information includes first indication information for instructing the first communication node whether to use the correspondence between the LCID and the MAC CE type included in the first configuration information.

In the case where the first indication information instructs the first communication node to use the correspondence between the LCID and the MAC CE type, the MAC CE type corresponding to the LCID is determined by using the correspondence between the LCID and the MAC CE type in the first configuration information sent by the second communication node.

In this embodiment, the first communication node receives the second configuration information delivered by the second communication node, where the second configuration information includes the first indication information for instructing the first communication node whether to use the configured correspondence between the LCID and the MAC CE type in the first configuration information. If the first indication information instructs the first communication node not to use the configured correspondence between the LCID and the MAC CE type in the first configuration information, the first communication node ignores the configured correspondence between the LCID and the MAC CE type and uses a correspondence between the LCID and the MAC CE type specified in a 3rd Generation Partnership Project (3GPP) standard protocol. If the first indication information instructs the first communication node to use the configured correspondence between the LCID and the MAC CE type in the first configuration information, the MAC CE type corresponding to the LCID is determined by using the correspondence between the LCID and the MAC CE type included in the first configuration information.

The first indication information includes, but is not limited to, the field below.

The field represents the use of the configured correspondence between the LCID and the MAC CE type and has a value range of true or false. If the field is configured to be true, the field instructs the first communication node to use the configured correspondence between the LCID and the MAC CE type in the first configuration information. If the field is configured to be false, the field instructs the first communication node to use the correspondence between the LCID and the MAC CE type specified in the 3GPP standard protocol.

Alternatively, the field represents a type of the correspondence between the LCID and the MAC CE type and has a value range of dynamic or default. If the field is configured to be dynamic, the field instructs the first communication node to use the configured correspondence between the LCID and the MAC CE type in the first configuration information. If the field is configured to be default, the field instructs the first communication node to use the correspondence between the LCID and the MAC CE type specified in the 3GPP standard protocol.

In an embodiment, before the second configuration information sent by the second communication node is received, the method further includes the steps below.

First capability information is sent to the second communication node, where the first capability information includes whether the first communication node supports a configuration of the correspondence between the LCID and the MAC CE type in the first configuration information. In the case where the first communication node supports the configuration of the correspondence between the LCID and the MAC CE type in the first configuration information, the MAC CE type corresponding to the LCID is determined by using the correspondence between the LCID and the MAC CE type included in the first configuration information.

The first capability information may be understood as capability information of the first communication node.

In this embodiment, the first capability information is optionally terminal capability information, and the first capability information includes whether to support the configuration of the correspondence between the LCID and the MAC CE type in the first configuration information.

The second communication node includes, but is not limited to, a network side or a TX UE in a sidelink scenario.

In this embodiment, the first communication node reports the first capability information to the second communication node. If the first communication node does not have a capability to support the configuration of the correspondence between the LCID and the MAC CE type in the first configuration information, the first communication node uses the correspondence between the LCID and the MAC CE specified in the 3GPP standard protocol. If the first communication node has the capability to support the configuration of the correspondence between the LCID and the MAC CE type in the first configuration information, the first communication node determines the MAC CE type corresponding to the LCID by using the correspondence between the LCID and the MAC CE type in the first configuration information sent by the second communication node.

In an embodiment, the first configuration information includes one or more of the following: All cells in all cell groups configured for the first communication node use the same correspondence between the LCID and the MAC CE type.

For all cell groups configured for the first communication node, each cell group is configured with a different correspondence between the LCID and the MAC CE type, and cells in each cell group use the correspondence between the LCID and the MAC CE type configured for the cell group to which the cells belong.

For all cells configured for the first communication node, each cell is configured with a different correspondence between the LCID and the MAC CE type.

A system message received by the first communication node in an IDLE state or an INACTIVE state includes the correspondence, and RRCsetup and/or RRCReconfiguration received by the first communication node in a connected state include the correspondence.

The first communication node may modify the correspondence through the received RRCReconfiguration.

In a handover process, a target cell carries the correspondence to a source-side cell through ReconfigurationWithSync.

In an embodiment, the second configuration information includes one or more of the following: All the cells in all the cell groups configured for the first communication node use the same first indication information.

For all the cell groups configured for the first communication node, each cell group is configured with different first indication information, and the cells in each cell group use the first indication information configured for the cell group to which the cells belong.

For all the cells configured for the first communication node, each cell is configured with different first indication information.

In this embodiment, the system message received by the first communication node in the IDLE state or the INACTIVE state includes the second configuration information, and RRCsetup and/or RRCReconfiguration received by the first communication node in the connected state include the second configuration information. The first communication node may modify the second configuration information through the received RRCReconfiguration.

In the handover process, the target cell carries the second configuration information to the source-side cell through ReconfigurationWithSync.

In an embodiment, the first configuration information includes a MAC CE type corresponding to an LCID value.

The step in which the MAC CE type corresponding to the LCID is determined based on the LCID and the first configuration information includes the step below.

Based on the LCID in the received MAC subheader and the MAC CE type corresponding to the LCID value in the first configuration information, a MAC CE type corresponding to the LCID in the MAC subheader is determined. In this embodiment, the first communication node receives the first configuration information delivered by the second communication node and including the MAC CE type corresponding to the LCID value. The first communication node receives the LCID in the MAC subheader in the MAC PDU delivered by the second communication node and determines whether the MAC PDU includes the MAC CE. If the MAC PDU does not include the MAC CE, the first communication node does not need to process the MAC CE.

If the MAC PDU includes the MAC CE, the MAC CE type included in the MAC PDU is determined according to the previously received MAC CE type corresponding to the LCID value. The content in the MAC CE is demodulated according to the received MAC CE type, and the behavior indicated in the MAC CE is performed.

In this embodiment, the first configuration information includes, but is not limited to, the following:
The MAC CE type corresponding to the LCID is composed of two parts: a starting LCID and a list of MAC CE types. Each element in the list of MAC CE types indicates one MAC CE type, and the MAC CE type indicated by the element is unique. The first element corresponds to the starting LCID, an LCID value corresponding to the second element is equal to the starting LCID plus 1, an LCID value corresponding to the third element is equal to the starting LCID plus 2, and so on.

The MAC CE type corresponding to the LCID:: = SEQUENCE { the starting LCID the list of MAC CE types:: = SEQUENCE (SIZE (1..the maximum number of elements in the list)) OF the MAC CE type }

For example, the MAC CE type corresponding to the LCID:: = SEQUENCE { the starting LCID list:: = 51 the list of MAC CE types:: = SEQUENCE {SP SRS Activation/Deactivation, Duplication Activation/Deactivation} }

This indicates that the LCID value for the SP SRS Activation/Deactivation MAC CE is 51, and the LCID value for the Duplication Activation/Deactivation MAC CE is 52.

In this embodiment, before the first configuration information sent by the second communication node is received, the method further includes the steps below.

The second configuration information sent by the second communication node is received, where the second configuration information includes second indication information for instructing the first communication node whether to use the MAC CE type corresponding to the LCID value included in the first configuration information.

In the case where the second indication information instructs the first communication node to use the MAC CE type corresponding to the LCID value, the MAC CE type corresponding to the LCID is determined by using the MAC CE type corresponding to the LCID value in the first configuration information sent by the second communication node.

In this embodiment, the first communication node receives the second configuration information delivered by the second communication node, where the second configuration information includes the second indication information for instructing the first communication node whether to use the configured MAC CE type corresponding to the LCID value in the first configuration information. If the second indication information instructs the first communication node not to use the configured MAC CE type corresponding to the LCID value in the first configuration information, the first communication node ignores the configured MAC CE type corresponding to the LCID value and uses the correspondence between the LCID and the MAC CE type specified in the 3GPP standard protocol. If the second indication information instructs the first communication node to use the configured MAC CE type corresponding to the LCID value in the first configuration information, the MAC CE type corresponding to the LCID in the received MAC subheader is determined by using the MAC CE type corresponding to the LCID value included in the first configuration information.

The second indication information includes, but is not limited to, the field below.

The field represents the use of the configured MAC CE type corresponding to the LCID and has a value range of true or false. If the field is configured to be true, the field instructs the first communication node to use the configured MAC CE type corresponding to the LCID value in the first configuration information. If the field is configured to be false, the field instructs the first communication node to use the correspondence between the LCID and the MAC CE type specified in the 3GPP standard protocol.

In this embodiment, before the second configuration information sent by the second communication node is received, the method further includes the steps below.

The second capability information is sent to the second communication node, where the second capability information includes whether the first communication node supports a configuration of the MAC CE type corresponding to the LCID value in the first configuration information.

In the case where the first communication node supports the MAC CE type corresponding to the LCID value in the first configuration information, the MAC CE type corresponding to the LCID in the received MAC subheader is determined by using the MAC CE type corresponding to the LCID value included in the first configuration information.

The second capability information may be understood as the capability information of the first communication node.

In this embodiment, the second capability information is optionally the terminal capability information, and the second capability information includes whether to support the configuration of the MAC CE type corresponding to the LCID in the first configuration information. The second communication node includes, but is not limited to, the network side or the TX UE in the sidelink scenario.

In this embodiment, the first communication node reports the second capability information to the second communication node. If the first communication node does not have a capability to support the configuration of the MAC CE type corresponding to the LCID value in the first configuration information, the first communication node uses the correspondence between the LCID and the MAC CE specified in the 3GPP standard protocol. If the first communication node has the capability to support the configuration of the MAC CE type corresponding to the LCID value in the first configuration information, the first communication node determines the MAC CE type corresponding to the LCID in the received MAC subheader by using the MAC CE type corresponding to the LCID value in the first configuration information sent by the second communication node.

In this embodiment, the first configuration information includes one or more of the following: All the cells in all the cell groups configured for the first communication node use the same MAC CE type corresponding to the LCID value.

For all the cell groups configured for the first communication node, each cell group is configured with a different MAC CE type corresponding to the LCID value, and the cells in each cell group use the MAC CE type corresponding to the LCID value configured for the cell group to which the cells belong.

For all the cells configured for the first communication node, each cell is configured with a different MAC CE type corresponding to the LCID value.

The system message received by the first communication node in the IDLE state or the INACTIVE state includes the MAC CE type corresponding to the LCID value, and RRCsetup and/or RRCReconfiguration received by the first communication node in the connected state include the MAC CE type corresponding to the LCID value.

The first communication node may modify the MAC CE type corresponding to the LCID value through the received RRCReconfiguration.

In the handover process, the target cell carries the MAC CE type corresponding to the LCID value to the source-side cell through ReconfigurationWithSync.

In this embodiment, the second configuration information includes one or more of the following: All the cells in all the cell groups configured for the first communication node use the same second indication information.

For all the cell groups configured for the first communication node, each cell group is configured with different second indication information, and the cells in each cell group use the second indication information configured for the cell group to which the cells belong.

For all the cells configured for the first communication node, each cell is configured with different second indication information.

In this embodiment, the system message received by the first communication node in the IDLE state or the INACTIVE state includes the second configuration information, and RRCsetup and/or RRCReconfiguration received by the first communication node in the connected state include the second configuration information. The first communication node may modify the second configuration information through the received RRCReconfiguration.

In the handover process, the target cell carries the second configuration information to the source-side cell through ReconfigurationWithSync.

In an embodiment, the first configuration information includes LCID values corresponding to MAC CE types under one or more radio resource configurations.

The step in which the MAC CE type corresponding to the LCID is determined based on the LCID and the first configuration information includes the step below.

The MAC CE type corresponding to the LCID is determined based on the LCID and an LCID value corresponding to a MAC CE type under a radio resource configuration.

The radio resource configuration includes one or more of an SCell configuration, a data radio bearer (DRB) configuration, a CSI-RS configuration, an SRS configuration, a PUCCH configuration, a TCI-state resource configuration, or a ZP CSI-RS resource configuration.

In this embodiment, the MAC CE type under the radio resource configuration is a MAC CE that can be used for processing a radio resource, where the processing includes, but is not limited to, activating/deactivating the radio resource or a resource associated with the radio resource or indicating the radio resource or a resource associated with the radio resource. An LCID value configured under the radio resource configuration corresponds to the MAC CE type under the radio resource configuration.

In this embodiment, the MAC CE type under the same radio resource configuration corresponds to a unique LCID value.

The LCID value corresponding to the MAC CE type under the radio resource configuration includes, but is not limited to, the field below.

A field configured under the radio resource configuration represents the LCID value corresponding to the MAC CE type for processing the radio resource. The processing includes, but is not limited to, activating/deactivating the radio resource or the resource associated with the radio resource or indicating the radio resource or the resource associated with the radio resource. For example, a field under IE PDSCH-Config represents an LCID value corresponding to a TCI States Activation/Deactivation for UE-specific PDSCH MAC CE. A MAC CE type corresponding to the field is used for activating/deactivating a TCI-State in tci-StatesToAddModList under PDSCH-Config. If the field is configured to be 50, it indicates that the LCID corresponding to the TCI States Activation/Deactivation for UE-specific PDSCH MAC CE is 50.

The system message received by the first communication node in the IDLE state or the INACTIVE state includes the LCID value corresponding to the MAC CE type under the radio resource configuration, and RRCsetup and/or RRCReconfiguration received by the first communication node in the connected state include the LCID value corresponding to the MAC CE type under the radio resource configuration. The first communication node may modify, through the received RRCReconfiguration, the LCID value corresponding to the MAC CE type under the radio resource configuration.

In the handover process, the target cell carries the LCID value corresponding to the MAC CE type under the radio resource configuration to the source-side cell through ReconfigurationWithSync.

In this embodiment, the first communication node receives an LCID in a subheader of the MAC CE and determines the received MAC CE type according to the previously received LCID value corresponding to the MAC CE type under the radio resource configuration. The first communication node receives the MAC subheader in the MAC PDU delivered by the second communication node and determines whether the MAC PDU includes the MAC CE. If the MAC PDU does not include the MAC CE, the first communication node does not need to process the MAC CE. If the MAC PDU includes the MAC CE, the received MAC CE type is determined according to the received LCID value corresponding to the MAC CE type under the radio resource configuration.

In an embodiment, before the first configuration information sent by the second communication node is received, the method further includes the steps below.

The second configuration information sent by the second communication node is received, where the second configuration information includes third indication information for instructing the first communication node whether to use the LCID value corresponding to the MAC CE type under the radio resource configuration.

In the case where the third indication information instructs the first communication node to use the LCID value corresponding to the MAC CE type under the radio resource configuration, the MAC CE type corresponding to the LCID is determined by using the LCID value corresponding to the MAC CE type under the radio resource configuration.

In this embodiment, the first communication node receives the second configuration information delivered by the second communication node, where the second configuration information includes the third indication information for instructing the first communication node whether to use the configured LCID value corresponding to the MAC CE type under the radio resource configuration. If the third indication information instructs the first communication node not to use the LCID value corresponding to the MAC CE type under the radio resource configuration, the first communication node ignores the LCID value corresponding to the MAC CE type under the radio resource configuration and uses the correspondence between the LCID and the MAC CE specified in the 3GPP standard protocol. If the third indication information instructs the first communication node to use the LCID value corresponding to the MAC CE type under the radio resource configuration, the first communication node determines the MAC CE type corresponding to the LCID by using the LCID value corresponding to the MAC CE type under the radio resource configuration.

The third indication information includes, but is not limited to, the field below.

The field represents the use of the LCID value corresponding to the MAC CE type under the radio resource configuration and has a value range of true or false. If the field is configured to be true, the field instructs a UE to use the LCID value corresponding to the MAC CE type under the radio resource configuration and in the first configuration information. If the field is configured to be false, the field instructs the UE to ignore the LCID value (if present) corresponding to the MAC CE type under the radio resource configuration and determine the MAC CE type by using the correspondence between the LCID and the MAC CE type specified in the 3GPP standard protocol. In an embodiment, before the second configuration information sent by the second communication node is received, the method further includes the steps below.

Third capability information is sent to the second communication node, where the third capability information includes whether the first communication node supports the LCID value corresponding to the MAC CE type under the radio resource configuration.

In the case where the first communication node supports the correspondence between the LCID and the MAC CE type configured under the radio resource configuration, the MAC CE type corresponding to the received LCID is determined by using the LCID value corresponding to the MAC CE type under the radio resource configuration.

The third capability information may be understood as the capability information of the first communication node. In this embodiment, the third capability information is optionally the terminal capability information, and the third capability information includes whether to support a configuration of the LCID value corresponding to the MAC CE type under the radio resource configuration in the first configuration information. The second communication node includes, but is not limited to, the network side or the TX UE in the sidelink scenario.

In this embodiment, the first communication node reports the third capability information to the second communication node. If the first communication node does not have a capability to support the configuration of the LCID value corresponding to the MAC CE type under the radio resource configuration, the first communication node uses the correspondence between the LCID and the MAC CE type specified in the 3GPP standard protocol. If the first communication node has the capability to support the configuration of the LCID value corresponding to the MAC CE type under the radio resource configuration, the first communication node determines the MAC CE type corresponding to the received LCID by using the LCID value corresponding to the MAC CE type under the radio resource configuration.

In an embodiment, the second configuration information includes one or more of the following: All the cells in all the cell groups configured for the first communication node use the same third indication information.

For all the cell groups configured for the first communication node, each cell group is configured with different third indication information, and the cells in each cell group use the third indication information configured for the cell group to which the cells belong.

For all the cells configured for the first communication node, each cell is configured with different third indication information.

The system message received by the first communication node in the IDLE state or the INACTIVE state includes the second configuration information, and RRCsetup and/or RRCReconfiguration received by the first communication node in the connected state include the second configuration information. The first communication node may modify the second configuration information through the received RRCReconfiguration.

In the handover process, the target cell carries the indication information to the source-side cell through ReconfigurationWithSync.

In an embodiment, the first configuration information includes a correspondence between an LCID and padding.

The method further includes the step below.

Whether the received MAC PDU includes the padding is determined based on the LCID and the correspondence between the LCID and the padding.

In this embodiment, the first communication node receives the configuration information delivered by the second communication node and including the correspondence between the LCID and the padding. The first communication node receives the LCID in the MAC subheader in the MAC PDU delivered by the second communication node and determines whether the MAC PDU includes the padding according to the correspondence between the LCID and the padding in the first configuration information.

The correspondence between the LCID and the padding includes, but is not limited to, the field below.

The field represents the LCID corresponding to the padding. For example, if the field representing the LCID corresponding to the padding is configured to be 60, it indicates that the LCID corresponding to the padding is 60.

The system message received by the first communication node in the IDLE state or the INACTIVE state includes the correspondence between the LCID and the padding, and RRCsetup and/or RRCReconfiguration received by the first communication node in the connected state include the correspondence between the LCID and the padding. The first communication node may modify the correspondence between the LCID and the padding through the received RRCReconfiguration.

In the handover process, the target cell carries the correspondence between the LCID and the padding to the source-side cell through ReconfigurationWithSync.

In an embodiment, before the first configuration information sent by the second communication node is received, the method further includes the steps below.

The second configuration information sent by the second communication node is received, where the second configuration information includes fourth indication information for instructing the first communication node whether to use the correspondence between the LCID and the padding included in the first configuration information.

In the case where the fourth indication information instructs the first communication node to use the correspondence between the LCID and the padding, whether the MAC PDU includes the padding is determined by using the first configuration information sent by the second communication node.

In this embodiment, the first communication node receives the fourth indication information in the second configuration information, where the fourth indication information is used for instructing the first communication node whether to use a configuration of the correspondence between the LCID and the padding carried in the first configuration information. If the first communication node is instructed not to use the configuration of the correspondence between the LCID and the padding carried in the first configuration information, the first communication node still uses a correspondence between the LCID and the padding specified in the 3GPP standard protocol. If the first communication node is instructed to use the configuration of the correspondence between the LCID and the padding carried in the first configuration information, whether the MAC PDU includes the padding is determined by using the first configuration information sent by the second communication node, that is, whether the MAC PDU includes the padding is determined by using the correspondence between the LCID and the padding sent by the second communication node.

The fourth indication information includes, but is not limited to, the field below.

The field represents the use of the configured correspondence between the LCID and the padding and has a value range of true or false. If the field is configured to be true, the field instructs the first communication node to use the configured correspondence between the LCID and the padding in the configuration information. If the field is configured to be false, the field instructs the first communication node to ignore the configured correspondence between the LCID and the padding (if present) and use the correspondence between the LCID and the padding specified in the 3GPP standard protocol.

Alternatively, the field represents a type of the correspondence between the LCID and the padding and has a value range of dynamic or default. If the field is configured to be dynamic, the field instructs the first communication node to use the configured correspondence between the LCID and the padding in the configuration information. If the field is configured to be default, the field instructs the first communication node to use the correspondence between the LCID and the padding specified in the 3GPP standard protocol.

In this embodiment, the system message received by the first communication node in the IDLE state or the INACTIVE state includes the second configuration information, and RRCsetup and/or RRCReconfiguration received by the first communication node in the connected state include the second configuration information. The first communication node may modify the second configuration information through the received RRCReconfiguration.

In the handover process, the target cell carries the second configuration information to the source-side cell through ReconfigurationWithSync.

In an embodiment, before the second configuration information sent by the second communication node is received, the method further includes the steps below.

Fourth capability information is sent to the second communication node, where the fourth capability information includes whether the first communication node supports the configuration of the correspondence between the LCID and the padding.

In the case where the first communication node supports the configuration of the correspondence between the LCID and the padding, whether the MAC PDU includes the padding is determined by using the correspondence between the LCID and the padding sent by the second communication node.

In this embodiment, the first communication node reports the fourth capability information to the second communication node, where the fourth capability information includes whether to support the configuration of the correspondence between the LCID and the padding in the first configuration information. The second communication node includes, but is not limited to, the network side or the TX UE in the sidelink scenario. If the fourth capability information does not support the configuration of the correspondence between the LCID and the padding in the first configuration information, the first communication node still uses the correspondence between the LCID and the padding specified in the 3GPP standard protocol. If the fourth capability information supports the configuration of the correspondence between the LCID and the padding in the first configuration information, whether the MAC PDU includes the padding is determined by using the correspondence between the LCID and the padding sent by the second communication node.

In an embodiment, the first configuration information includes one or more of the following: All the cells in all the cell groups configured for the first communication node use the same correspondence between the LCID and the padding.

For all the cell groups configured for the first communication node, each cell group is configured with a different correspondence between the LCID and the padding, and the cells in each cell group use the correspondence between the LCID and the padding configured for the cell group to which the cells belong.

For all the cells configured for the first communication node, each cell is configured with a different correspondence between the LCID and the padding.

In an embodiment, the second configuration information includes one or more of the following: All the cells in all the cell groups configured for the first communication node use the same fourth indication information.

For all the cell groups configured for the first communication node, each cell group is configured with different fourth indication information, and the cells in each cell group use the fourth indication information configured for the cell group to which the cells belong.

For all the cells configured for the first communication node, each cell is configured with different fourth indication information.

In an embodiment, the length of an LCID field is determined by the number of LCIDs configured for the first communication node.

In this embodiment, when the first communication node receives a determined number of configured LCIDs, the first communication node considers that the length of the LCID field is a minimum bit length capable of exactly representing the number of LCIDs.

For example, if the number of LCIDs configured for the first communication node is 30, the length of the LCID field received by the UE is 5 bits.

Further, an LCID configured for the first communication node includes at least one of the LCID corresponding to the MAC CE type, an LCID corresponding to a logical channel instance, or the LCID corresponding to the padding.

Further, the LCID corresponding to the MAC CE type includes, but is not limited to, the LCID corresponding to the MAC CE type specified in the 3GPP standard protocol or the LCID corresponding to the MAC CE type in a configurable correspondence between the LCID and the MAC CE type.

In an embodiment, the MAC CE type includes one or more of: a recommended bit rate MAC CE; an SP ZP CSI-RS Resource Set Activation/Deactivation MAC CE; a PUCCH spatial relation Activation/Deactivation MAC CE; the SP SRS Activation/Deactivation MAC CE; an SP CSI reporting on PUCCH Activation/Deactivation MAC CE; a TCI State Indication for UE-specific PDCCH MAC CE; the TCI States Activation/Deactivation for UE-specific PDSCH MAC CE; an Aperiodic CSI Trigger State Subselection MAC CE; an SP CSI-RS/CSI-IM Resource Set Activation/Deactivation MAC CE; the Duplication Activation/Deactivation MAC CE; an SCell Activation/Deactivation MAC CE; a Long DRX Command MAC CE; the DRX Command MAC CE; the Timing Advance Command MAC CE; a UE Contention Resolution Identity MAC CE; a recommended bit rate query MAC CE; a Multiple Entry PHR MAC CE; a Configured Grant Confirmation MAC CE; a Single Entry PHR MAC CE; a C-RNTI MAC CE; a Short Truncated BSR MAC CE; a Long Truncated BSR MAC CE; a Short BSR MAC CE; or a Long BSR MAC CE.

In one embodiment, an embodiment of the present application provides an information processing method. The method may be performed by an information processing apparatus which may be implemented by software and/or hardware. The information processing method is applied by a second communication node. The second communication node may be any one of the preceding base stations, which is not limited in this embodiment.

As shown in FIG. 5, the information processing method provided by the embodiment of the present application mainly includes S21 and S22.

In S21, first configuration information is sent to a first communication node.

In S22, an LCID is sent to the first communication node so that the first communication node determines, based on the LCID and the first configuration information, a MAC CE type corresponding to the LCID.

In an embodiment, the first configuration information includes a correspondence between an LCID and a MAC CE type.

The step in which the first communication node determines, based on the LCID and the first configuration information, the MAC CE type corresponding to the LCID includes the step below. The first communication node determines, based on the LCID and the correspondence between the LCID and the MAC CE type, the MAC CE type corresponding to the LCID.

In an embodiment, the correspondence between the LCID and the MAC CE type is configured by an RRC IE, and a corresponding LCID value is configured for a MAC CE type configured for the first communication node.

In an embodiment, before the first configuration information is sent to the first communication node, the method further includes the step below.

Second configuration information is sent to the first communication node, where the second configuration information includes first indication information for instructing the first communication node whether to use the correspondence between the LCID and the MAC CE type included in the first configuration information. In the case where the first indication information instructs the first communication node to use the correspondence between the LCID and the MAC CE type, the first communication node determines the MAC CE type corresponding to the LCID by using the correspondence between the LCID and the MAC CE type included in the first configuration information.

In an embodiment, before the second configuration information is sent to the first communication node, the method further includes the step below.

First capability information sent by the first communication node is received, where the first capability information includes whether the first communication node supports a configuration of the correspondence between the LCID and the MAC CE type in the first configuration information. In the case where the first communication node supports the configuration of the correspondence between the LCID and the MAC CE type, the first communication node determines the MAC CE type corresponding to the LCID by using the correspondence between the LCID and the MAC CE type in the first configuration information.

In an embodiment, the first configuration information includes one or more of the following: All cells in all cell groups configured for the first communication node use the same correspondence between the LCID and the MAC CE type.

For all cell groups configured for the first communication node, each cell group is configured with a different correspondence between the LCID and the MAC CE type, and cells in each cell group use the correspondence between the LCID and the MAC CE type configured for the cell group to which the cells belong.

For all cells configured for the first communication node, each cell is configured with a different correspondence between the LCID and the MAC CE type.

In an embodiment, the second configuration information includes one or more of the following: All the cells in all the cell groups configured for the first communication node use the same first indication information.

For all the cell groups configured for the first communication node, each cell group is configured with different first indication information, and the cells in each cell group use the first indication information configured for the cell group to which the cells belong.

For all the cells configured for the first communication node, each cell is configured with different first indication information.

In an embodiment, the first configuration information includes a MAC CE type corresponding to an LCID value.

The step in which the MAC CE type corresponding to the LCID is determined based on the LCID and the first configuration information includes the step below.

Based on an LCID in a received MAC subheader and the MAC CE type corresponding to the LCID value in the first configuration information, a MAC CE type corresponding to the LCID in the MAC subheader is determined.

In this embodiment, before the first configuration information is sent to the first communication node, the method further includes the step below.

The second configuration information is sent to the first communication node, where the second configuration information includes second indication information for instructing the first communication node whether to use the MAC CE type corresponding to the LCID value included in the first configuration information. In the case where the second indication information instructs the first communication node to use the MAC CE type corresponding to the LCID value, the first communication node determines the MAC CE type corresponding to the LCID in the received MAC subheader by using the MAC CE type corresponding to the LCID value included in the first configuration information.

In this embodiment, before the second configuration information is sent to the first communication node, the method further includes the step below.

Second capability information sent by the first communication node is received, where the second capability information includes whether the first communication node supports a configuration of the MAC CE type corresponding to the LCID value in the first configuration information. In the case where the first communication node supports the configuration of the MAC CE type corresponding to the LCID value, the first communication node determines the MAC CE type corresponding to the LCID in the received MAC subheader by using the MAC CE type corresponding to the LCID value in the first configuration information.

In this embodiment, the first configuration information includes one or more of the following: All the cells in all the cell groups configured for the first communication node use the same configuration of the MAC CE type corresponding to the LCID value.

For all the cell groups configured for the first communication node, each cell group is configured with a different configuration of the MAC CE type corresponding to the LCID value, and the cells in each cell group use the configuration of the MAC CE type corresponding to the LCID value configured for the cell group to which the cells belong.

For all the cells configured for the first communication node, each cell is configured with a different configuration of the MAC CE type corresponding to the LCID value.

In this embodiment, the second configuration information includes one or more of the following:
All the cells in all the cell groups configured for the first communication node use the same second indication information.

For all the cell groups configured for the first communication node, each cell group is configured with different second indication information, and the cells in each cell group use the second indication information configured for the cell group to which the cells belong.

For all the cells configured for the first communication node, each cell is configured with different second indication information.

In an embodiment, the first configuration information includes LCID values corresponding to MAC CE types under one or more radio resource configurations.

The step in which the first communication node determines, based on the LCID and the first configuration information, the MAC CE type corresponding to the LCID includes the step below. The first communication node determines, based on the LCID and an LCID value corresponding to a MAC CE type under a radio resource configuration, the MAC CE type corresponding to the LCID.

In an embodiment, the MAC CE type under the radio resource configuration is a MAC CE that can be used for processing a radio resource, where the processing includes, but is not limited to, activating/deactivating the radio resource or a resource associated with the radio resource or indicating the radio resource or a resource associated with the radio resource. An LCID value configured under the radio resource configuration corresponds to the MAC CE type under the radio resource configuration.

In an embodiment, before the first configuration information is sent to the first communication node, the method further includes the step below.

The second configuration information is sent to the second communication node, where the second configuration information includes third indication information for instructing the first communication node whether to use the LCID value corresponding to the MAC CE type under the radio resource configuration. In the case where the third indication information instructs the first communication node to use the LCID value corresponding to the MAC CE type under the radio resource configuration, the first communication node determines the MAC CE type corresponding to the LCID by using the configured LCID value corresponding to the MAC CE type under the radio resource configuration.

In an embodiment, before the second configuration information is sent to the second communication node, the method further includes the step below.

Third capability information sent by the first communication node is received, where the third capability information includes whether the first communication node supports the configured LCID value corresponding to the MAC CE type under the radio resource configuration. In the case where the first communication node supports the configured LCID value corresponding to the MAC CE type under the radio resource configuration, the first communication node determines the MAC CE type corresponding to the LCID by using the configured LCID value corresponding to the MAC CE type under the radio resource configuration.

In an embodiment, the second configuration information includes one or more of the following: All the cells in all the cell groups configured for the first communication node use the same third indication information.

For all the cell groups configured for the first communication node, each cell group is configured with different third indication information, and the cells in each cell group use the third indication information configured for the cell group to which the cells belong.

For all the cells configured for the first communication node, each cell is configured with different third indication information.

In an embodiment, the first configuration information includes a correspondence between an LCID and padding.

The method further includes that the first communication node determines, based on the LCID and the correspondence between the LCID and the padding, whether a received MAC PDU includes the padding.

In an embodiment, before the first configuration information is sent to the first communication node, the method further includes the step below.

The second configuration information is sent to the first communication node, where the second configuration information includes fourth indication information for instructing the first communication node whether to use the correspondence between the LCID and the padding included in the first configuration information. In the case where the fourth indication information instructs the first communication node to use the correspondence between the LCID and the padding, the first communication node determines whether the MAC PDU includes the padding by using the first configuration information sent by the second communication node.

In an embodiment, before the second configuration information is sent to the first communication node, the method further includes the step below.

Fourth capability information sent by the first communication node is received, where the fourth capability information includes whether the first communication node supports a configuration of the correspondence between the LCID and the padding. In the case where the first communication node supports the configuration of the correspondence between the LCID and the padding, the first communication node determines whether the MAC PDU includes the padding by using the correspondence between the LCID and the padding sent by the second communication node.

In an embodiment, the first configuration information includes one or more of the following: All the cells in all the cell groups configured for the first communication node use the same correspondence between the LCID and the padding.

For all the cell groups configured for the first communication node, each cell group is configured with a different correspondence between the LCID and the padding, and the cells in each cell group use the correspondence between the LCID and the padding configured for the cell group to which the cells belong.

For all the cells configured for the first communication node, each cell is configured with a different correspondence between the LCID and the padding.

In an embodiment, the second configuration information includes one or more of the following: All the cells in all the cell groups configured for the first communication node use the same fourth indication information.

For all the cell groups configured for the first communication node, each cell group is configured with different fourth indication information, and the cells in each cell group use the fourth indication information configured for the cell group to which the cells belong.

For all the cells configured for the first communication node, each cell is configured with different fourth indication information.

In an embodiment, the length of an LCID field is determined by the number of LCIDs configured for the first communication node.

In an embodiment, the MAC CE type includes one or more of: a recommended bit rate MAC CE; an SP ZP CSI-RS Resource Set Activation/Deactivation MAC CE; a PUCCH spatial relation Activation/Deactivation MAC CE; an SP SRS Activation/Deactivation MAC CE; an SP CSI reporting on PUCCH Activation/Deactivation MAC CE; a TCI State Indication for UE-specific PDCCH MAC CE; a TCI States Activation/Deactivation for UE-specific PDSCH MAC CE; an Aperiodic CSI Trigger State Subselection MAC CE; an SP CSI-RS/CSI-IM Resource Set Activation/Deactivation MAC CE; a Duplication Activation/Deactivation MAC CE; an SCell Activation/Deactivation MAC CE; a Long DRX Command MAC CE; a DRX Command MAC CE; a Timing Advance Command MAC CE; a UE Contention Resolution Identity MAC CE; a recommended bit rate query MAC CE; a Multiple Entry PHR MAC CE; a Configured Grant Confirmation MAC CE; a Single Entry PHR MAC CE; a C-RNTI MAC CE; a Short Truncated BSR MAC CE; a Long Truncated BSR MAC CE; a Short BSR MAC CE; or a Long BSR MAC CE.

In an application embodiment, a method is provided for determining a MAC CE type according to first configuration information including a correspondence between an LCID and a MAC CE type so that one LCID can correspond to multiple different MAC CE types. In this embodiment, a first communication node is a terminal, UE, for example.

FIG. 6 is a flowchart in which a MAC CE type is determined according to first configuration information including a correspondence between an LCID and a MAC CE type according to an embodiment of the present application. As shown in FIG. 6, the steps below are mainly included. In step one, the UE reports terminal capability information about whether to support a configured correspondence between the LCID and the MAC CE type.

In this step, the UE reports the terminal capability information to a second communication node, where the terminal capability information includes whether the terminal supports the configuration of the correspondence between the LCID and the MAC CE type in the first configuration information. The second communication node includes, but is not limited to, a network side or a TX UE in a sidelink scenario. If the terminal does not have a capability to support the correspondence between the LCID and the MAC CE type in the first configuration information, the UE uses a correspondence between the LCID and the MAC CE type specified in a 3GPP standard protocol. If the terminal has the capability to support the correspondence between the LCID and the MAC CE type in the first configuration information, step two is performed.

In step two, the UE receives first indication information about whether to use the correspondence between the LCID and the MAC CE type.

In this step, the UE receives second configuration information delivered by the second communication node, where the second configuration information includes the first indication information for instructing the UE whether to use the configured correspondence between the LCID and the MAC CE type in the first configuration information. If the UE is instructed not to use the configured correspondence between the LCID and the MAC CE type in the first configuration information, the UE ignores the configured correspondence between the LCID and the MAC CE type (if present) and uses the correspondence between the LCID and the MAC CE type specified in the 3GPP standard protocol. If the UE is instructed to use the configured correspondence between the LCID and the MAC CE type in the first configuration information, step three is performed.

The first indication information for instructing the UE whether to use the correspondence between the LCID and the MAC CE type includes, but is not limited to, the field below.

The field represents the use of the configured correspondence between the LCID and the MAC CE type and has a value range of true or false. If the field is configured to be true, the field instructs the UE to use the configured correspondence between the LCID and the MAC CE type in the first configuration information. If the field is configured to be false, the field instructs the UE to use the correspondence between the LCID and the MAC CE type specified in the 3GPP standard protocol.

Alternatively, the field represents a type of the correspondence between the LCID and the MAC CE type and has a value range of dynamic or default. If the field is configured to be dynamic, the field instructs the UE to use the configured correspondence between the LCID and the MAC CE type in the first configuration information. If the field is configured to be default, the field instructs the UE to use the correspondence between the LCID and the MAC CE type specified in the 3GPP standard protocol.

The second configuration information about whether to use the correspondence between the LCID and the MAC CE type includes, but is not limited to, the configuration below.

A UE-level configuration means that all cells in all cell groups configured for the UE use the same configured indication information.

Alternatively, a cell group-level configuration means that for cell groups configured for the UE, each cell group is configured with one piece of first indication information, and all cells in a cell group use the same configured first indication information configured for the cell group to which the cells belong. The first indication information is independently configured between the cell groups.

Alternatively, a cell-level configuration means that for cells configured for the UE, each cell is configured with one piece of first indication information, and the first indication information may be independently configured between the cells.

A system message received by the UE in an IDLE state or an INACTIVE state includes the first indication information, and RRCsetup and/or RRCReconfiguration received by the UE in a connected state include the first indication information. The UE may modify the first indication information through the received RRCReconfiguration.

In a handover process, a target cell carries the first indication information to a source-side cell through ReconfigurationWithSync.

In step three, the UE receives the correspondence between the LCID and the MAC CE type.

In this step, the UE receives the first configuration information delivered by the second communication node and including the correspondence between the LCID and the MAC CE type. The correspondence means that one corresponding LCID value is configured for each MAC CE type configured for the UE.

The first configuration information including the correspondence between the LCID and the MAC CE type includes, but is not limited to, the manner below.

In the first manner, a list is used. Each element in the list is mainly composed of two parts: the first part indicates the MAC CE type and the second part indicates the LCID value. A correspondence is established between the MAC CE type and the LCID value indicated in the same element.

The list of the correspondence between the LCID and the MAC CE type:: = SEQUENCE (SIZE (1..the maximum number of elements in the list)) OF the correspondence between the LCID and the MAC CE type.

The correspondence between the LCID and the MAC CE type:: = SEQUENCE { MAC CE type ENUMERATED { Timing Advance Command, DRX Command, .... } LCID value INTEGER (0..63) }

For example, the list of the correspondence between the LCID and the MAC CE type:: = SEQUENCE {a correspondence 1 between the LCID and the MAC CE type, a correspondence 2 between the LCID and the MAC CE type}.

The correspondence 1 between the LCID and the MAC CE type:: = SEQUENCE { MAC CE type Timing Advance Command LCID value 47 }

The correspondence 2 between the LCID and the MAC CE type:: = SEQUENCE { MAC CE type DRX Command LCID value 48 }

This indicates that the LCID value for a Timing Advance Command MAC CE is 47, and the LCID value for a DRX Command MAC CE is 48.

Alternatively, in the second manner, the correspondence between the LCID and the MAC CE type is mainly composed of two parts: the first part is a list of MAC CE types and the second part is a list of LCIDs. The two lists have the same number of elements, and elements in the two lists have a one-to-one correspondence. The first element in the first list corresponds to the first element in the second list, the second element in the first list corresponds to the second element in the second list, and so on.

The correspondence between the LCID and the MAC CE type:: = SEQUENCE { the list of MAC CE types:: = SEQUENCE (SIZE (1..the maximum number of elements in the list)) OF the MAC CE type the list of LCIDs:: = SEQUENCE (SIZE (1..the maximum number of elements in the list)) OF the LCID }

For example, the correspondence between the LCID and the MAC CE type:: = SEQUENCE { the list of MAC CE types:: = SEQUENCE {SP SRS Activation/Deactivation, Duplication Activation/Deactivation} the list of LCIDs:: = SEQUENCE {51, 52} }

This indicates that the LCID value for an SP SRS Activation/Deactivation MAC CE is 51, and the LCID value for a Duplication Activation/Deactivation MAC CE is 52.

The first configuration information including the correspondence between the LCID and the MAC CE type includes, but is not limited to, the configuration below.

A UE-level configuration means that all the cells in all the cell groups configured for the UE use the same configured correspondence.

Alternatively, a cell group-level configuration means that for the cell groups configured for the UE, each cell group is configured with one correspondence, and all the cells in the cell group use the same configured correspondence configured for the cell group to which the cells belong. The correspondence is independently configured between the cell groups.

Alternatively, a cell-level configuration means that for the cells configured for the UE, each cell is configured with one correspondence, and the correspondence may be independently configured between the cells.

The system message received by the UE in the IDLE state or the INACTIVE state includes the correspondence, and RRCsetup and/or RRCReconfiguration received by the UE in the connected state include the correspondence.

The UE may modify the correspondence through the received RRCReconfiguration.

In the handover process, the target cell carries the correspondence to the source-side cell through ReconfigurationWithSync.

In step four, the UE receives an LCID and determines a MAC CE type corresponding to the LCID according to the correspondence.

In this step, the UE receives an LCID in a MAC subheader in a MAC PDU delivered by the second communication node and determines whether the MAC PDU includes a MAC CE. If the MAC PDU does not include the MAC CE, the UE does not need to process the MAC CE.

If the MAC PDU includes the MAC CE, a MAC CE type included in the MAC PDU is determined according to the previously received correspondence between the LCID and the MAC CE type. The content in the MAC CE is demodulated according to the received MAC CE type, and a behavior indicated in the MAC CE is performed.

Further, the MAC CE type in the correspondence between the LCID and the MAC CE type received by the UE includes at least one of: a recommended bit rate MAC CE; an SP ZP CSI-RS Resource Set Activation/Deactivation MAC CE; a PUCCH spatial relation Activation/Deactivation MAC CE; the SP SRS Activation/Deactivation MAC CE; an SP CSI reporting on PUCCH Activation/Deactivation MAC CE; a TCI State Indication for UE-specific PDCCH MAC CE; a TCI States Activation/Deactivation for UE-specific PDSCH MAC CE; an Aperiodic CSI Trigger State Subselection MAC CE; an SP CSI-RS/CSI-IM Resource Set Activation/Deactivation MAC CE; the Duplication Activation/Deactivation MAC CE; an SCell Activation/Deactivation MAC CE; a Long DRX Command MAC CE; the DRX Command MAC CE; the Timing Advance Command MAC CE; a UE Contention Resolution Identity MAC CE; a recommended bit rate query MAC CE; a Multiple Entry PHR MAC CE; a Configured Grant Confirmation MAC CE; a Single Entry PHR MAC CE; a C-RNTI MAC CE; a Short Truncated BSR MAC CE; a Long Truncated BSR MAC CE; a Short BSR MAC CE; or a Long BSR MAC CE.

In an application embodiment, a method is provided for determining a received MAC CE type according to first configuration information including a MAC CE type corresponding to an LCID value so that one LCID can correspond to multiple different MAC CE types. In this embodiment, a first communication node is a terminal, UE, for example.

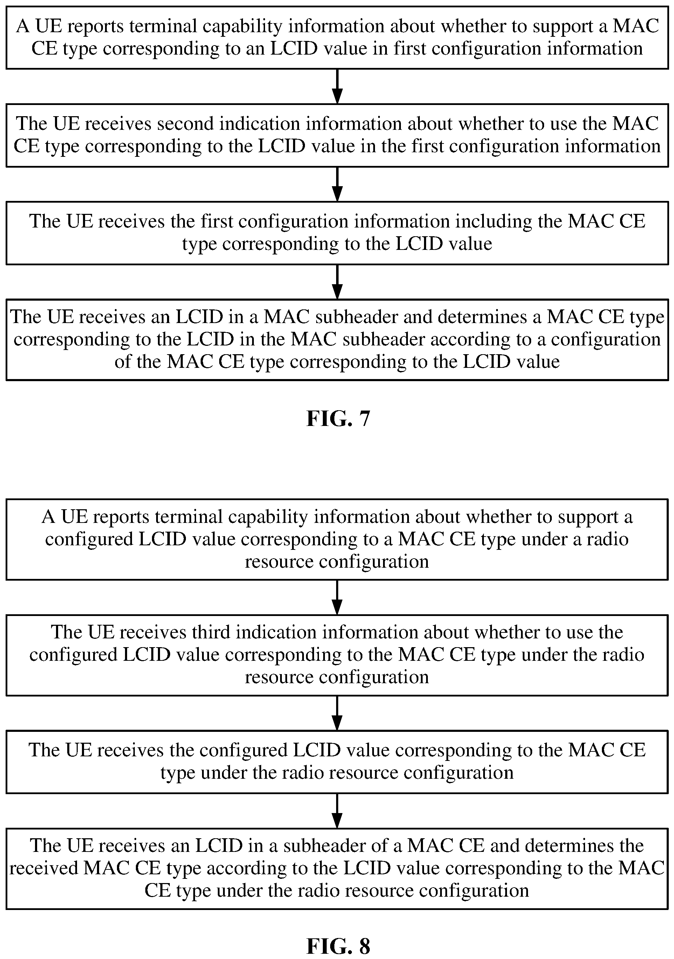

FIG. 7 is a flowchart in which a MAC CE type is determined according to first configuration information including a MAC CE type corresponding to an LCID according to an embodiment of the present application. As shown in FIG. 7, the steps below are mainly included.

In step one, the UE reports terminal capability information about whether to support the MAC CE type corresponding to the LCID value in the first configuration information.

In this step, the UE reports the terminal capability information to a second communication node, where the terminal capability information includes whether the terminal supports a configuration of the MAC CE type corresponding to the LCID value in the first configuration information. The second communication node includes, but is not limited to, a network side or a TX UE in a sidelink scenario. If the terminal does not have a capability to support the MAC CE type corresponding to the LCID value in the first configuration information, the UE uses a correspondence between the LCID and the MAC CE specified in a 3GPP standard protocol. If the terminal has the capability to support the MAC CE type corresponding to the LCID value in the first configuration information, step two is performed.

In step two, the UE receives second indication information about whether to use the MAC CE type corresponding to the LCID value in the first configuration information.

In this step, the UE receives second configuration information delivered by the second communication node, where the second configuration information includes the second indication information for instructing the UE whether to use the configured MAC CE type corresponding to the LCID value in the first configuration information. If the UE is instructed not to use the configured MAC CE type corresponding to the LCID value in the first configuration information, the UE ignores the configured MAC CE type corresponding to the LCID value in the first configuration information (if present) and uses the correspondence between the LCID and the MAC CE type specified in the 3GPP standard protocol. If the UE is instructed to use the configured MAC CE type corresponding to the LCID value in the first configuration information, step three is performed.

The second indication information includes, but is not limited to, the field below.

The field represents the use of the configured MAC CE type corresponding to the LCID and has a value range of true or false. If the field is configured to be true, the field instructs the UE to use the configured MAC CE type corresponding to the LCID in the first configuration information. If the field is configured to be false, the field instructs the UE to use the correspondence between the LCID and the MAC CE type specified in the 3GPP standard protocol.

The second configuration information includes, but is not limited to, the configuration below. A UE-level configuration means that all cells in all cell groups configured for the UE use the same configured second indication information.

Alternatively, a cell group-level configuration means that for cell groups configured for the UE, each cell group is configured with one piece of second indication information, and all cells in a cell group use the same configured second indication information configured for the cell group to which the cells belong. The second indication information is independently configured between the cell groups.

Alternatively, a cell-level configuration means that for cells configured for the UE, each cell is configured with one piece of second indication information, and the second indication information may be independently configured between the cells.

A system message received by the UE in an IDLE state or an INACTIVE state includes the second indication information, and RRCsetup and/or RRCReconfiguration received by the UE in a connected state include the second indication information. The UE may modify the second indication information through the received RRCReconfiguration.

In a handover process, a target cell carries the second indication information to a source-side cell through ReconfigurationWithSync.

In step three, the UE receives the first configuration information including the MAC CE type corresponding to the LCID value.

In this step, the UE receives the first configuration information delivered by the second communication node and including the MAC CE type corresponding to the LCID value. The configuration of the MAC CE type corresponding to the LCID value in the first configuration information includes, but is not limited to, the configuration below.

The configuration of the MAC CE type corresponding to the LCID value is composed of two parts: a starting LCID and a list of MAC CE types. Each element in the list of MAC CE types indicates one MAC CE type, and the MAC CE type indicated by the element is unique. The first element corresponds to the starting LCID, an LCID value corresponding to the second element is equal to the starting LCID plus 1, an LCID value corresponding to the third element is equal to the starting LCID plus 2, and so on.

The MAC CE type corresponding to the LCID:: = SEQUENCE { the starting LCID the list of MAC CE types:: = SEQUENCE (SIZE (1..the maximum number of elements in the list)) OF the MAC CE type }

For example, the MAC CE type corresponding to the LCID:: = SEQUENCE { the starting LCID list:: = 51 the list of MAC CE types:: = SEQUENCE {SP SRS Activation/Deactivation, Duplication Activation/Deactivation} }

This indicates that the LCID value for an SP SRS Activation/Deactivation MAC CE is 51, and the LCID value for a Duplication Activation/Deactivation MAC CE is 52.

The first configuration information including the MAC CE type corresponding to the LCID includes, but is not limited to, the configuration below.

A UE-level configuration means that all the cells in all the cell groups configured for the UE use the same configured MAC CE type corresponding to the LCID.

Alternatively, a cell group-level configuration means that for the cell groups configured for the UE, each cell group is configured with one MAC CE type corresponding to the LCID value, and all the cells in the cell group use the same configured MAC CE type corresponding to the LCID value configured for the cell group to which the cells belong. The MAC CE type corresponding to the LCID value is independently configured between the cell groups.

Alternatively, a cell-level configuration means that for the cells configured for the UE, each cell is configured with one MAC CE type corresponding to the LCID value, and the MAC CE type corresponding to the LCID value may be independently configured between the cells.

The system message received by the UE in the IDLE state or the INACTIVE state includes the MAC CE type corresponding to the LCID value, and RRCsetup and/or RRCReconfiguration received by the UE in the connected state include the MAC CE type corresponding to the LCID value.

The UE may modify the MAC CE type corresponding to the LCID value through the received RRCReconfiguration.

In the handover process, the target cell carries the MAC CE type corresponding to the LCID value to the source-side cell through ReconfigurationWithSync.

In step four, the UE receives an LCID in a MAC subheader and determines a MAC CE type corresponding to the LCID in the MAC subheader according to the configuration of the MAC CE type corresponding to the LCID value.

In this step, the UE receives an LCID in a MAC subheader in a MAC PDU delivered by the second communication node and determines whether the MAC PDU includes a MAC CE. If the MAC PDU does not include the MAC CE, the UE does not need to process the MAC CE.

If the MAC PDU includes the MAC CE, the MAC CE type included in the MAC PDU is determined according to the previously received configuration of the MAC CE type corresponding to the LCID value. The content in the MAC CE is demodulated according to the received MAC CE type, and a behavior indicated in the MAC CE is performed.

In an application embodiment, this embodiment mainly provides a method for determining a MAC CE type according to an LCID value corresponding to a MAC CE type under a radio resource configuration when a first communication node receives an LCID in a MAC subheader so that one LCID can correspond to multiple different MAC CE types. The radio resource configuration includes, but is not limited to, an SCell configuration, a DRB configuration, a CSI-RS configuration, an SRS configuration, a PUCCH configuration, a TCI-state resource configuration, and a ZP CSI-RS resource configuration. In this embodiment, the first communication node is a terminal, UE, for example.

FIG. 8 is a flowchart in which a received MAC CE type is determined according to an LCID value corresponding to a MAC CE type under a radio resource configuration according to an embodiment of the present application. As shown in FIG. 8, the steps below are mainly included. In step one, the UE reports terminal capability information about whether to support the LCID value corresponding to the MAC CE type under the radio resource configuration.

In this step, the UE reports the terminal capability information to a second communication node, where the terminal capability information includes whether to support a configuration of the LCID value corresponding to the MAC CE type under the radio resource configuration. The second communication node includes, but is not limited to, a network side or a TX UE in a sidelink scenario. If the terminal does not have a capability to support the LCID value corresponding to the MAC CE type under the radio resource configuration, the UE uses a correspondence between the LCID and the MAC CE specified in a 3GPP standard protocol. If the terminal has the capability to support the LCID value corresponding to the MAC CE type under the radio resource configuration, step two is performed.

In step two, the UE receives third indication information about whether to use the LCID value corresponding to the MAC CE type under the radio resource configuration.

In this step, the UE receives the third indication information in second configuration information, where the third indication information is used for instructing the UE whether to use the LCID value corresponding to the MAC CE type under the radio resource configuration. If the UE is instructed not to use the LCID value corresponding to the MAC CE type under the radio resource configuration, the UE uses the correspondence between the LCID and the MAC CE type specified in the 3GPP standard protocol. If the UE is instructed to use the LCID value corresponding to the MAC CE type under the radio resource configuration, step three is performed.

The third indication information for instructing the UE whether to use the LCID value corresponding to the MAC CE type under the radio resource configuration includes, but is not limited to, the field below.

The field represents the use of the LCID value corresponding to the MAC CE type under the radio resource configuration and has a value range of true or false. If the field is configured to be true, the field instructs the UE to use the LCID value corresponding to the MAC CE type under the radio resource configuration and in the configuration information. If the field is configured to be false, the field instructs the UE to ignore the LCID value (if present) corresponding to the MAC CE type under the radio resource configuration and use the correspondence between the LCID and the MAC CE specified in the 3GPP standard protocol.

The second configuration information includes, but is not limited to, the configuration below. A UE-level configuration means that all cells in all cell groups configured for the UE use the same configured third indication information.

Alternatively, a cell group-level configuration means that for cell groups configured for the UE, each cell group is configured with one piece of third indication information, and all cells in a cell group use the same configured third indication information configured for the cell group to which the cells belong. The third indication information is independently configured between the cell groups.

Alternatively, a cell-level configuration means that for cells configured for the UE, each cell is configured with one piece of third indication information, and the third indication information may be independently configured between the cells.

A system message received by the UE in an IDLE state or an INACTIVE state includes the second configuration information, and RRCsetup and/or RRCReconfiguration received by the UE in a connected state include the second configuration information. The UE may modify the second configuration information through the received RRCReconfiguration.

In a handover process, a target cell carries the second configuration information to a source-side cell through ReconfigurationWithSync.

In step three, the UE receives the configured LCID value corresponding to the MAC CE type under the radio resource configuration.

In this step, the UE receives the first configuration information delivered by the second communication node, where the first configuration information includes the LCID value corresponding to the MAC CE type under the radio resource configuration. The MAC CE type is a MAC CE that can be used for processing a radio resource, where the processing includes, but is not limited to, activating/deactivating the radio resource or a resource associated with the radio resource or indicating the radio resource or a resource associated with the radio resource. The LCID value corresponds to the MAC CE type.

The LCID value corresponding to the MAC CE type under the radio resource configuration includes, but is not limited to, the field below.

A field under the radio resource configuration represents the LCID value corresponding to the MAC CE type for processing the radio resource. The processing includes, but is not limited to, activating/deactivating the radio resource or the resource associated with the radio resource or indicating the radio resource or the resource associated with the radio resource. For example, a field under IE PDSCH-Config represents an LCID value corresponding to a TCI States Activation/Deactivation for UE-specific PDSCH MAC CE. A MAC CE type corresponding to the field is used for activating/deactivating a TCI-State in tci-StatesToAddModList under PDSCH-Config. If the field is configured to be 50, it indicates that the LCID corresponding to the TCI States Activation/Deactivation for UE-specific PDSCH MAC CE is 50.

The system message received by the UE in the IDLE state or the INACTIVE state includes the LCID value corresponding to the MAC CE type under the radio resource configuration, and RRCsetup and/or RRCReconfiguration received by the UE in the connected state include the LCID value corresponding to the MAC CE type under the radio resource configuration. The UE may modify, through the received RRCReconfiguration, the LCID value corresponding to the MAC CE type under the radio resource configuration.

In the handover process, the target cell carries the LCID value corresponding to the MAC CE type under the radio resource configuration to the source-side cell through ReconfigurationWithSync.

In step four, the UE receives an LCID in a subheader of a MAC CE and determines the received MAC CE type according to the LCID value corresponding to the MAC CE type under the radio resource configuration.

In this step, the UE receives the LCID in the subheader of the MAC CE and determines the received MAC CE type according to the previously received configuration of the LCID value corresponding to the MAC CE type under the radio resource configuration. The UE receives a MAC subheader in a MAC PDU delivered by the second communication node and determines whether the MAC PDU includes the MAC CE. If the MAC PDU does not include the MAC CE, the UE does not need to process the MAC CE. If the MAC PDU includes the MAC CE, the received MAC CE type is determined according to the received configuration of the LCID value corresponding to the MAC CE type under the radio resource configuration.

In an application embodiment, this embodiment mainly provides a method for determining the length of an LCID field by the number of LCIDs configured for a first communication node, where the length of the LCID field is not fixed. In this embodiment, the first communication node is a terminal, for example.

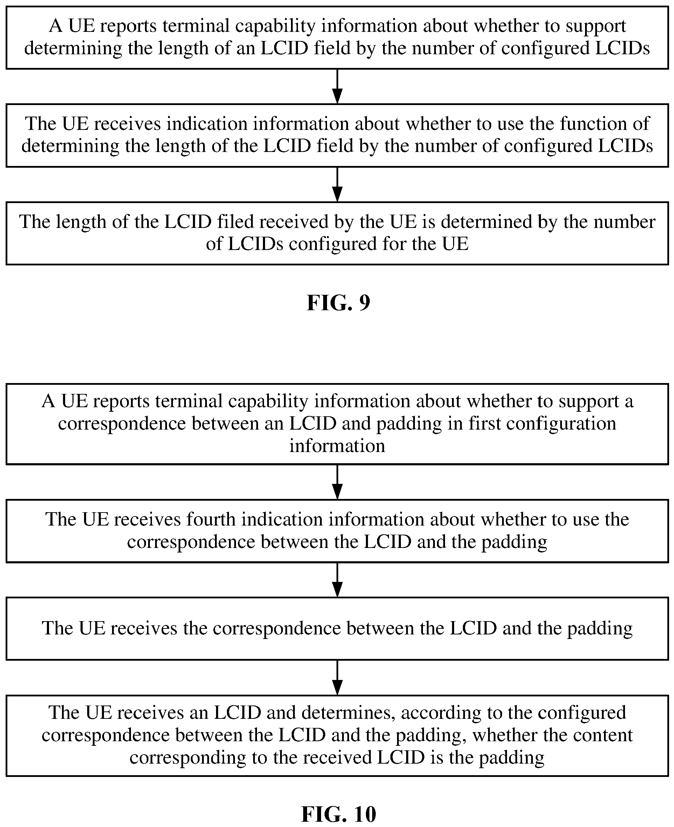

FIG. 9 is a flowchart in which the length of an LCID field is determined according to the number of LCIDs configured for a first communication node according to an embodiment of the present application. As shown in FIG. 9, the steps below are mainly included.

In step one, a UE reports terminal capability information about whether to support determining the length of the LCID field by the number of configured LCIDs.

In this step, the UE reports the terminal capability information to a second communication node, where the terminal capability information includes whether to support determining the length of a received LCID field by the number of LCIDs configured for the UE. The second communication node includes, but is not limited to, a network side or a TX UE in a sidelink scenario. If the terminal does not have a capability to support determining the length of the LCID field by the number of configured LCIDs, the UE processes an LCID according to the length of the field specified in a 3GPP standard protocol. If the terminal has the capability to support determining the length of the LCID field by the number of configured LCIDs, step two is performed.

In step two, the UE receives indication information about whether to use the function of determining the length of the LCID field by the number of configured LCIDs.

In this step, the UE acquires a field in configuration information, where the field is used for instructing the UE whether to use the function of determining the length of the LCID field by the number of LCIDs configured for the UE. If the UE is instructed not to use the function of determining the length of the LCID field by the number of LCIDs configured for the UE, the UE still processes the LCID according to the length of the field specified in the 3GPP standard protocol. If the UE is instructed to use the function of determining the length of the LCID field by the number of LCIDs configured for the UE, step three is performed.

The indication information about whether to use the function of determining the length of the LCID field by the number of configured LCIDs includes, but is not limited to, the field below.

The field represents the determination of the length of the LCID field by the number of configured LCIDs and has a value range of true or false. If the field is configured to be true, the field instructs the UE to use the function of determining the length of the LCID field by the number of configured LCIDs. If the field is configured to be false, the field instructs the UE to process the LCID by using the length of the field specified in the 3GPP standard protocol.

The indication information about whether to use the function of determining the length of the LCID field by the number of configured LCIDs includes, but is not limited to, the configuration below.

A UE-level configuration means that all cells in all cell groups configured for the UE use the same configured indication information.

Alternatively, a cell group-level configuration means that for cell groups configured for the UE, each cell group is configured with one piece of indication information, and all cells in a cell group use the same configured indication information configured for the cell group to which the cells belong. The indication information is independently configured between the cell groups. Alternatively, a cell-level configuration means that for cells configured for the UE, each cell is configured with one piece of indication information, and the indication information may be independently configured between the cells.

A system message received by the UE in an IDLE state or an INACTIVE state includes the indication information, and RRCsetup and/or RRCReconfiguration received by the UE in a connected state include the indication information. The UE may modify the indication information through the received RRCReconfiguration.

In a handover process, a target cell carries the indication information to a source-side cell through ReconfigurationWithSync.

In step three, the length of the LCID filed received by the UE is determined by the number of LCIDs configured for the UE.

In this step, when the UE receives a determined number of configured LCIDs, the UE considers that the length of the LCID field is a minimum bit length capable of exactly representing the number of LCIDs.

For example, if the number of LCIDs configured for the UE is 30, the length of the LCID field received by the UE is 5 bits.

Further, an LCID configured for the UE includes at least one of an LCID corresponding to a MAC CE type, an LCID corresponding to a logical channel instance, or an LCID corresponding to padding.

Further, the LCID corresponding to the MAC CE type includes, but is not limited to, an LCID corresponding to a MAC CE type specified in the 3GPP standard protocol or an LCID corresponding to a MAC CE type in a configurable correspondence between the LCID and the MAC CE type.

In an application embodiment, this embodiment mainly provides a method for determining, according to first configuration information including a correspondence between an LCID and padding, whether the content corresponding to a received LCID is the padding. In this embodiment, a first communication node is a terminal, for example.

FIG. 10 is a flowchart in which whether the content corresponding to a received LCID is padding is determined according to first configuration information including a correspondence between an LCID and the padding according to the present application. As shown in FIG. 10, the steps below are mainly included.

In step one, a UE reports terminal capability information about whether to support the correspondence between the LCID and the padding in the first configuration information.

In this step, the UE reports the terminal capability information to a second communication node, where the terminal capability information includes whether to support a configuration of the correspondence between the LCID and the padding in the first configuration information. The second communication node includes, but is not limited to, a network side or a TX UE in a sidelink scenario. If the terminal does not have a capability to support the configuration of the correspondence between the LCID and the padding in the first configuration information, the UE still uses a correspondence between the LCID and the padding specified in a 3GPP standard protocol. If the terminal has the capability to support the configuration of the correspondence between the LCID and the padding in the first configuration information, step two is performed. In step two, the UE receives fourth indication information about whether to use the correspondence between the LCID and the padding.

In this step, the UE acquires the fourth indication information in second configuration information, where the fourth indication information is used for instructing the UE whether to use the configuration of the correspondence between the LCID and the padding carried in the first configuration information. If the UE is instructed not to use the correspondence between the LCID and the padding in the first configuration information, the UE uses the correspondence between the LCID and the padding specified in the 3GPP standard protocol. If the UE is instructed to use the correspondence between the LCID and the padding in the first configuration information, step three is performed.

The fourth indication information for instructing the UE whether to use the correspondence between the LCID and the padding includes, but is not limited to, the field below.

The field represents the use of the configured correspondence between the LCID and the padding and has a value range of true or false. If the field is configured to be true, the field instructs the UE to use the configured correspondence between the LCID and the padding in the first configuration information. If the field is configured to be false, the field instructs the UE to ignore the correspondence between the LCID and the padding (if present) in the first configuration information and use the correspondence between the LCID and the padding specified in the 3GPP standard protocol.

Alternatively, the field represents a type of the correspondence between the LCID and the padding and has a value range of dynamic or default. If the field is configured to be dynamic, the field instructs the UE to use the correspondence between the LCID and the padding in the first configuration information. If the field is configured to be default, the field instructs the UE to use the correspondence between the LCID and the padding specified in the 3GPP standard protocol. The second configuration information includes, but is not limited to, the configuration below.

A UE-level configuration means that all cells in all cell groups configured for the UE use the same configured fourth indication information.

Alternatively, a cell group-level configuration means that for cell groups configured for the UE, each cell group is configured with one piece of fourth indication information, and all cells in a cell group use the same configured fourth indication information configured for the cell group to which the cells belong. The fourth indication information is independently configured between the cell groups.

Alternatively, a cell-level configuration means that for cells configured for the UE, each cell is configured with one piece of indication information, and the fourth indication information may be independently configured between the cells.

A system message received by the UE in an IDLE state or an INACTIVE state includes the second configuration information, and RRCsetup and/or RRCReconfiguration received by the UE in a connected state include the second configuration information. The UE may modify the second configuration information through the received RRCReconfiguration.

In a handover process, a target cell carries the second configuration information to a source-side cell through ReconfigurationWithSync.

In step three, the UE receives the correspondence between the LCID and the padding.

In this step, the UE receives the first configuration information delivered by the second communication node and including the correspondence between the LCID and the padding.

A configured field representing the correspondence between the LCID and the padding includes, but is not limited to, the field below.

The field represents the LCID corresponding to the padding. For example, if the field representing the LCID corresponding to the padding is configured to be 60, it indicates that the LCID corresponding to the padding is 60.

The first configuration information including the correspondence between the LCID and the padding includes, but is not limited to, the configuration below.

A UE-level configuration means that all the cells in all the cell groups configured for the UE use the same configured correspondence between the LCID and the padding.

Alternatively, a cell group-level configuration means that for the cell groups configured for the UE, each cell group is configured with one correspondence between the LCID and the padding, and all the cells in the cell group use the same configured correspondence between the LCID and the padding configured for the cell group to which the cells belong. The correspondence between the LCID and the padding is independently configured between the cell groups.

Alternatively, a cell-level configuration means that for the cells configured for the UE, each cell is configured with one correspondence between the LCID and the padding, and the correspondence between the LCID and the padding may be independently configured between the cells.

The system message received by the UE in the IDLE state or the INACTIVE state includes the correspondence, and RRCsetup and/or RRCReconfiguration received by the UE in the connected state include the correspondence. The UE may modify the correspondence through the received RRCReconfiguration.

In the handover process, the target cell carries the correspondence to the source-side cell through ReconfigurationWithSync.

In step four, the UE receives the LCID and determines, according to the configured correspondence between the LCID and the padding, whether the content corresponding to the received LCID is the padding.

In this step, the UE receives an LCID in a MAC subheader in a MAC PDU delivered by the second communication node and determines whether the MAC PDU includes the padding according to a correspondence between the LCID in the MAC subheader and the padding.

In one embodiment, an embodiment of the present application provides an information processing apparatus which may be implemented by software and/or hardware. The information processing apparatus is configured in a first communication node. The first communication node may be any one of the preceding terminals, which is not limited in this embodiment.

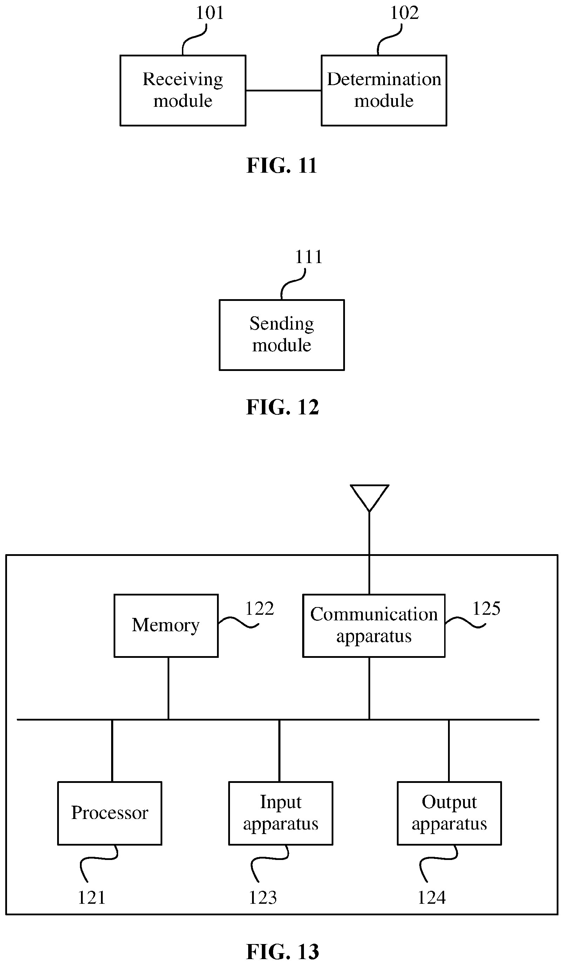

As shown in FIG. 11, the information processing apparatus provided by the embodiment of the present application mainly includes a receiving module 101 and a determination module 102. The receiving module 101 is configured to receive first configuration information sent by a second communication node and an LCID sent by the second communication node.

The determination module 102 is configured to determine, based on the first configuration information, a correspondence between an LCID and a MAC CE type.

In an embodiment, the apparatus further includes the receiving module 101 and the determination module 102.

The receiving module 101 is configured to receive the LCID sent by the second communication node.

The determination module 102 is configured to determine, based on the LCID and the first configuration information, a MAC CE type corresponding to the LCID.

In an embodiment, the first configuration information includes the correspondence between the LCID and the MAC CE type.

The step in which the MAC CE type corresponding to the LCID is determined based on the LCID and the first configuration information includes the step below.

The MAC CE type corresponding to the LCID is determined based on the LCID and the correspondence between the LCID and the MAC CE type.

In an embodiment, the correspondence between the LCID and the MAC CE type is configured by an RRC IE, and a corresponding LCID value is configured for a MAC CE type configured for the first communication node.

In an embodiment, before the first configuration information sent by the second communication node is received, the step below is further included.

Second configuration information sent by the second communication node is received, where the second configuration information includes first indication information for instructing the first communication node whether to use the correspondence between the LCID and the MAC CE type included in the first configuration information.

In the case where the first indication information instructs the first communication node to use the correspondence between the LCID and the MAC CE type, the MAC CE type corresponding to the LCID is determined by using the correspondence between the LCID and the MAC CE type included in the first configuration information.

In an embodiment, before the second configuration information sent by the second communication node is received, the step below is further included.

First capability information is sent to the second communication node, where the first capability information includes whether the first communication node supports a configuration of the correspondence between the LCID and the MAC CE type in the first configuration information. In the case where the first communication node supports the configuration of the correspondence between the LCID and the MAC CE type, the MAC CE type corresponding to the LCID is determined by using the correspondence between the LCID and the MAC CE type in the first configuration information.

In an embodiment, the first configuration information includes one or more of the following: All cells in all cell groups configured for the first communication node use the same correspondence between the LCID and the MAC CE type.

For all cell groups configured for the first communication node, each cell group is configured with a different correspondence between the LCID and the MAC CE type, and cells in each cell group use the correspondence between the LCID and the MAC CE type configured for the cell group to which the cells belong.

For all cells configured for the first communication node, each cell is configured with a different correspondence between the LCID and the MAC CE type.

In an embodiment, the second configuration information includes one or more of the following: All the cells in all the cell groups configured for the first communication node use the same first indication information.

For all the cell groups configured for the first communication node, each cell group is configured with different first indication information, and the cells in each cell group use the first indication information configured for the cell group to which the cells belong.

For all the cells configured for the first communication node, each cell is configured with different first indication information.

In an embodiment, the first configuration information includes a MAC CE type corresponding to an LCID value.

The step in which the MAC CE type corresponding to the LCID is determined based on the LCID and the first configuration information includes the step below.

Based on an LCID in a received MAC subheader and the MAC CE type corresponding to the LCID value in the first configuration information, a MAC CE type corresponding to the LCID in the MAC subheader is determined.

In this embodiment, before the first configuration information sent by the second communication node is received, the step below is further included.

The second configuration information sent by the second communication node is received, where the second configuration information includes second indication information for instructing the first communication node whether to use the MAC CE type corresponding to the LCID value included in the first configuration information.

In the case where the second indication information instructs the first communication node to use the MAC CE type corresponding to the LCID value in the first configuration information, the MAC CE type corresponding to the LCID in the received MAC subheader is determined by using the MAC CE type corresponding to the LCID value included in the first configuration information. In this embodiment, before the second configuration information sent by the second communication node is received, the operation below is further included.

Second capability information is sent to the second communication node, where the second capability information includes whether the first communication node supports a configuration of the MAC CE type corresponding to the LCID value in the first configuration information.

In the case where the first communication node supports the configuration of the MAC CE type corresponding to the LCID, the MAC CE type corresponding to the LCID in the received MAC subheader is determined by using the MAC CE type corresponding to the LCID value in the first configuration information.

In this embodiment, the first configuration information includes one or more of the following: All the cells in all the cell groups configured for the first communication node use the same configuration of the MAC CE type corresponding to the LCID value.

For all the cell groups configured for the first communication node, each cell group is configured with a different configuration of the MAC CE type corresponding to the LCID value, and the cells in each cell group use the configuration of the MAC CE type corresponding to the LCID value configured for the cell group to which the cells belong.

For all the cells configured for the first communication node, each cell is configured with a different configuration of the MAC CE type corresponding to the LCID value.

In this embodiment, the second configuration information includes one or more of the following: All the cells in all the cell groups configured for the first communication node use the same second indication information.

For all the cell groups configured for the first communication node, each cell group is configured with different second indication information, and the cells in each cell group use the second indication information configured for the cell group to which the cells belong.

For all the cells configured for the first communication node, each cell is configured with different second indication information.

In an embodiment, the first configuration information includes LCID values corresponding to MAC CE types under one or more radio resource configurations.

The step in which the MAC CE type corresponding to the LCID is determined based on the LCID and the first configuration information includes the operation below.

The MAC CE type corresponding to the LCID is determined based on the LCID and an LCID value corresponding to a MAC CE type under a radio resource configuration.

In an embodiment, the MAC CE type under the radio resource configuration is a MAC CE that can be used for processing a radio resource, where the processing includes, but is not limited to, activating/deactivating the radio resource or a resource associated with the radio resource or indicating the radio resource or a resource associated with the radio resource. An LCID value configured under the radio resource configuration corresponds to the MAC CE type under the radio resource configuration.

In an embodiment, before the first configuration information sent by the second communication node is received, the operation below is further included.

The second configuration information sent by the second communication node is received, where the second configuration information includes third indication information for instructing the first communication node whether to use the LCID value corresponding to the MAC CE type under the radio resource configuration.

In the case where the third indication information instructs the first communication node to use the LCID value corresponding to the MAC CE type under the radio resource configuration, the MAC CE type corresponding to the LCID is determined by using the configured LCID value corresponding to the MAC CE type under the radio resource configuration.

In an embodiment, before the second configuration information sent by the second communication node is received, the operation below is further included.

Third capability information is sent to the second communication node, where the third capability information includes whether the first communication node supports the configured LCID value corresponding to the MAC CE type under the radio resource configuration.

In the case where the first communication node supports the configured LCID value corresponding to the MAC CE type under the radio resource configuration, the MAC CE type corresponding to the LCID is determined by using the configured LCID value corresponding to the MAC CE type under the radio resource configuration.

In an embodiment, the second configuration information includes one or more of the following: All the cells in all the cell groups configured for the first communication node use the same third indication information.

For all the cell groups configured for the first communication node, each cell group is configured with different third indication information, and the cells in each cell group use the third indication information configured for the cell group to which the cells belong.

For all the cells configured for the first communication node, each cell is configured with different third indication information.

In an embodiment, the first configuration information includes a correspondence between an LCID and padding.

The method further includes the step below.

Whether a received MAC PDU includes the padding is determined based on the LCID and the correspondence between the LCID and the padding.

In an embodiment, before the first configuration information sent by the second communication node is received, the operation below is further included.

The second configuration information sent by the second communication node is received, where the second configuration information includes fourth indication information for instructing the first communication node whether to use the correspondence between the LCID and the padding included in the first configuration information.

In the case where the fourth indication information instructs the first communication node to use the correspondence between the LCID and the padding, whether the MAC PDU includes the padding is determined by using the first configuration information sent by the second communication node.

In an embodiment, before the second configuration information sent by the second communication node is received, the step below is further included.

Fourth capability information is sent to the second communication node, where the fourth capability information includes whether the first communication node supports a configuration of the correspondence between the LCID and the padding.

In the case where the first communication node supports the configuration of the correspondence between the LCID and the padding, whether the MAC PDU includes the padding is determined by using the correspondence between the LCID and the padding sent by the second communication node.

In an embodiment, the first configuration information includes one or more of the following: All the cells in all the cell groups configured for the first communication node use the same correspondence between the LCID and the padding.

For all the cell groups configured for the first communication node, each cell group is configured with a different correspondence between the LCID and the padding, and the cells in each cell group use the correspondence between the LCID and the padding configured for the cell group to which the cells belong.

For all the cells configured for the first communication node, each cell is configured with a different correspondence between the LCID and the padding.

In an embodiment, the second configuration information includes one or more of the following: All the cells in all the cell groups configured for the first communication node use the same fourth indication information.

For all the cell groups configured for the first communication node, each cell group is configured with different fourth indication information, and the cells in each cell group use the fourth indication information configured for the cell group to which the cells belong.

For all the cells configured for the first communication node, each cell is configured with different fourth indication information.

In an embodiment, the length of an LCID field is determined by the number of LCIDs configured for the first communication node.

In an embodiment, the MAC CE type includes one or more of: a recommended bit rate MAC CE; an SP ZP CSI-RS Resource Set Activation/Deactivation MAC CE; a PUCCH spatial relation Activation/Deactivation MAC CE; an SP SRS Activation/Deactivation MAC CE; an SP CSI reporting on PUCCH Activation/Deactivation MAC CE; a TCI State Indication for UE-specific PDCCH MAC CE; a TCI States Activation/Deactivation for UE-specific PDSCH MAC CE; an Aperiodic CSI Trigger State Subselection MAC CE; an SP CSI-RS/CSI-IM Resource Set Activation/Deactivation MAC CE; a Duplication Activation/Deactivation MAC CE; an SCell Activation/Deactivation MAC CE; a Long DRX Command MAC CE; a DRX Command MAC CE; a Timing Advance Command MAC CE; a UE Contention Resolution Identity MAC CE; a recommended bit rate query MAC CE; a Multiple Entry PHR MAC CE; a Configured Grant Confirmation MAC CE; a Single Entry PHR MAC CE; a C-RNTI MAC CE; a Short Truncated BSR MAC CE; a Long Truncated BSR MAC CE; a Short BSR MAC CE; or a Long BSR MAC CE.

The information processing apparatus provided in this embodiment may perform the information processing method according to any embodiment of the present application and has function modules and beneficial effects corresponding to the performed method. For technical details not described in detail in this embodiment, reference may be made to the information processing method according to any embodiment of the present application.

It is to be noted that units and modules included in the embodiment of the information processing apparatus are just divided according to functional logic, and the division is not limited to this as long as the corresponding functions can be implemented. Additionally, the specific names of function units are just intended for distinguishing between each other and are not to limit the scope of the present application.

In one embodiment, an embodiment of the present application provides an information processing apparatus which may be implemented by software and/or hardware. The information processing apparatus is configured in a second communication node. The second communication node may be any one of the preceding base stations, which is not limited in this embodiment.

As shown in FIG. 12, the information processing apparatus provided by the embodiment of the present application mainly includes a sending module 111.

The sending module 111 is configured to send first configuration information to a first communication node and send an LCID to the first communication node so that the first communication node determines, based on the LCID and the first configuration information, a MAC CE type corresponding to the LCID.

In an embodiment, the first configuration information includes a correspondence between an LCID and a MAC CE type.

The step in which the first communication node determines, based on the LCID and the first configuration information, the MAC CE type corresponding to the LCID includes the step below. The first communication node determines, based on the LCID and the correspondence between the LCID and the MAC CE type, the MAC CE type corresponding to the LCID.

In an embodiment, the correspondence between the LCID and the MAC CE type is configured by an RRC IE, and a corresponding LCID value is configured for a MAC CE type configured for the first communication node.

In an embodiment, before the first configuration information is sent to the first communication node, the step below is further included.

Second configuration information is sent to the first communication node, where the second configuration information includes first indication information for instructing the first communication node whether to use the correspondence between the LCID and the MAC CE type included in the first configuration information. In the case where the first indication information instructs the first communication node to use the correspondence between the LCID and the MAC CE type, the first communication node determines the MAC CE type corresponding to the LCID by using the correspondence between the LCID and the MAC CE type included in the first configuration information.

In an embodiment, before the second configuration information is sent to the first communication node, the step below is further included.

First capability information sent by the first communication node is received, where the first capability information includes whether the first communication node supports a configuration of the correspondence between the LCID and the MAC CE type in the first configuration information. In the case where the first communication node supports the configuration of the correspondence between the LCID and the MAC CE type, the first communication node determines the MAC CE type corresponding to the LCID by using the correspondence between the LCID and the MAC CE type in the first configuration information.

In an embodiment, the first configuration information includes one or more of the following: All cells in all cell groups configured for the first communication node use the same correspondence between the LCID and the MAC CE type.

For all cell groups configured for the first communication node, each cell group is configured with a different correspondence between the LCID and the MAC CE type, and cells in each cell group use the correspondence between the LCID and the MAC CE type configured for the cell group to which the cells belong.

For all cells configured for the first communication node, each cell is configured with a different correspondence between the LCID and the MAC CE type.

In an embodiment, the second configuration information includes one or more of the following: All the cells in all the cell groups configured for the first communication node use the same first indication information.

For all the cell groups configured for the first communication node, each cell group is configured with different first indication information, and the cells in each cell group use the first indication information configured for the cell group to which the cells belong.

For all the cells configured for the first communication node, each cell is configured with different first indication information.

In an embodiment, the first configuration information includes a MAC CE type corresponding to an LCID value.

The step in which the MAC CE type corresponding to the LCID is determined based on the LCID and the first configuration information includes the step below.

Based on an LCID in a received MAC subheader and the MAC CE type corresponding to the LCID value in the first configuration information, a MAC CE type corresponding to the LCID in the MAC subheader is determined.

In this embodiment, before the first configuration information is sent to the first communication node, the step below is further included.

The second configuration information is sent to the first communication node, where the second configuration information includes second indication information for instructing the first communication node whether to use the MAC CE type corresponding to the LCID value included in the first configuration information. In the case where the second indication information instructs the first communication node to use the MAC CE type corresponding to the LCID value in the first configuration information, the first communication node determines the MAC CE type corresponding to the LCID in the MAC subheader by using a configuration of the MAC CE type corresponding to the LCID value in the first configuration information.

In this embodiment, before the second configuration information is sent to the first communication node, the step below is further included.

Second capability information sent by the first communication node is received, where the second capability information includes whether the first communication node supports the configuration of the MAC CE type corresponding to the LCID value in the first configuration information. In the case where the first communication node supports the configuration of the MAC CE type corresponding to the LCID value, the first communication node determines the MAC CE type corresponding to the LCID in the received MAC subheader by using the MAC CE type corresponding to the LCID value in the first configuration information.

In an embodiment, the first configuration information includes one or more of the following: All the cells in all the cell groups configured for the first communication node use the same MAC CE type corresponding to the LCID.

For all the cell groups configured for the first communication node, each cell group is configured with a different MAC CE type corresponding to the LCID, and the cells in each cell group use the MAC CE type corresponding to the LCID configured for the cell group to which the cells belong.

For all the cells configured for the first communication node, each cell is configured with a different MAC CE type corresponding to the LCID.

In an embodiment, the second configuration information includes one or more of the following: All the cells in all the cell groups configured for the first communication node use the same second indication information.

For all the cell groups configured for the first communication node, each cell group is configured with different second indication information, and the cells in each cell group use the second indication information configured for the cell group to which the cells belong.

For all the cells configured for the first communication node, each cell is configured with different second indication information.

In an embodiment, the first configuration information includes LCID values corresponding to MAC CE types under one or more radio resource configurations.

The step in which the first communication node determines, based on the LCID and the first configuration information, the MAC CE type corresponding to the LCID includes the step below. The first communication node determines, based on the LCID and an LCID value corresponding to a MAC CE type under a radio resource configuration, the MAC CE type corresponding to the LCID.

In an embodiment, before the first configuration information is sent to the first communication node, the step below is further included.

The second configuration information is sent to the second communication node, where the second configuration information includes third indication information for instructing the first communication node whether to use the LCID value corresponding to the MAC CE type under the radio resource configuration. In the case where the third indication information instructs the first communication node to use the LCID value corresponding to the MAC CE type under the radio resource configuration, the first communication node determines the MAC CE type corresponding to the LCID by using the configured LCID value corresponding to the MAC CE type under the radio resource configuration.

In an embodiment, before the second configuration information is sent to the second communication node, the step below is further included.

Third capability information sent by the first communication node is received, where the third capability information includes whether the first communication node supports the configured LCID value corresponding to the MAC CE type under the radio resource configuration. In the case where the first communication node supports the configured LCID value corresponding to the MAC CE type under the radio resource configuration, the first communication node determines the MAC CE type corresponding to the LCID by using the configured LCID value corresponding to the MAC CE type under the radio resource configuration.

In an embodiment, the second configuration information includes one or more of the following: All the cells in all the cell groups configured for the first communication node use the same third indication information.

For all the cell groups configured for the first communication node, each cell group is configured with different third indication information, and the cells in each cell group use the third indication information configured for the cell group to which the cells belong.

For all the cells configured for the first communication node, each cell is configured with different third indication information.

In an embodiment, the first configuration information includes a correspondence between an LCID and padding.

The method further includes that the first communication node determines, based on the LCID and the correspondence between the LCID and the padding, whether a received MAC PDU includes the padding.

In an embodiment, before the first configuration information is sent to the first communication node, the step below is further included.

The second configuration information is sent to the first communication node, where the second configuration information includes fourth indication information for instructing the first communication node whether to use the correspondence between the LCID and the padding included in the first configuration information. In the case where the fourth indication information instructs the first communication node to use the correspondence between the LCID and the padding, the first communication node determines whether the MAC PDU includes the padding by using the first configuration information sent by the second communication node.

In an embodiment, before the second configuration information is sent to the first communication node, the step below is further included.

Fourth capability information sent by the first communication node is received, where the fourth capability information includes whether the first communication node supports a configuration of the correspondence between the LCID and the padding. In the case where the first communication node supports the configuration of the correspondence between the LCID and the padding, the first communication node determines whether the MAC PDU includes the padding by using the correspondence between the LCID and the padding sent by the second communication node.

In an embodiment, the first configuration information includes one or more of the following: All the cells in all the cell groups configured for the first communication node use the same correspondence between the LCID and the padding.

For all the cell groups configured for the first communication node, each cell group is configured with a different correspondence between the LCID and the padding, and the cells in each cell group use the correspondence between the LCID and the padding configured for the cell group to which the cells belong.

For all the cells configured for the first communication node, each cell is configured with a different correspondence between the LCID and the padding.

In an embodiment, the second configuration information includes one or more of the following: All the cells in all the cell groups configured for the first communication node use the same fourth indication information.

For all the cell groups configured for the first communication node, each cell group is configured with different fourth indication information, and the cells in each cell group use the fourth indication information configured for the cell group to which the cells belong.

For all the cells configured for the first communication node, each cell is configured with different fourth indication information.

In an embodiment, the length of an LCID field is determined by the number of LCIDs configured for the first communication node.

In an embodiment, the MAC CE type includes one or more of: a recommended bit rate MAC CE; an SP ZP CSI-RS Resource Set Activation/Deactivation MAC CE; a PUCCH spatial relation Activation/Deactivation MAC CE; an SP SRS Activation/Deactivation MAC CE; an SP CSI reporting on PUCCH Activation/Deactivation MAC CE; a TCI State Indication for UE-specific PDCCH MAC CE; a TCI States Activation/Deactivation for UE-specific PDSCH MAC CE; an Aperiodic CSI Trigger State Subselection MAC CE; an SP CSI-RS/CSI-IM Resource Set Activation/Deactivation MAC CE; a Duplication Activation/Deactivation MAC CE; an SCell Activation/Deactivation MAC CE; a Long DRX Command MAC CE; a DRX Command MAC CE; a Timing Advance Command MAC CE; a UE Contention Resolution Identity MAC CE; a recommended bit rate query MAC CE; a Multiple Entry PHR MAC CE; a Configured Grant Confirmation MAC CE; a Single Entry PHR MAC CE; a C-RNTI MAC CE; a Short Truncated BSR MAC CE; a Long Truncated BSR MAC CE; a Short BSR MAC CE; or a Long BSR MAC CE.

The information processing apparatus provided in this embodiment may perform the information processing method according to any embodiment of the present application and has function modules and beneficial effects corresponding to the performed method. For technical details not described in detail in this embodiment, reference may be made to the information processing method according to any embodiment of the present application.

It is to be noted that units and modules included in the embodiment of the information processing apparatus are just divided according to functional logic, and the division is not limited to this as long as the corresponding functions can be implemented. Additionally, the specific names of function units are just intended for distinguishing between each other and are not to limit the scope of the present application.

An embodiment of the present application further provides a device. FIG. 13 is a structure diagram of a device according to an embodiment of the present application. As shown in FIG. 13, the device includes a processor 121, a memory 122, an input apparatus 123, an output apparatus 124, and a communication apparatus 125. One or more processors 121 may be provided in the device. One processor 121 is used as an example in FIG. 13. The processor 121, the memory 122, the input apparatus 123, and the output apparatus 124 in the device may be connected through a bus or in other manners. In FIG. 13, the connection through a bus is shown as an example.

As a computer-readable storage medium, the memory 122 may be configured to store software programs, computer-executable programs, and modules, for example, program instructions/modules corresponding to the information processing methods in the embodiments of the present application. The processor 121 executes software programs, instructions, and modules stored in the memory 122 to perform various function applications and data processing of the device, that is, to implement any method according to an embodiment of the present application.

The memory 122 may mainly include a program storage region and a data storage region, where the program storage region may store an operating system and an application program required by at least one function, and the data storage region may store data created according to the use of the device. Additionally, the memory 122 may include a high-speed random-access memory and may also include a nonvolatile memory, such as at least one magnetic disk memory, a flash memory, or another nonvolatile solid-state memory. In some examples, the memory 122 may further include memories remotely disposed relative to the processor 121, and these remote memories may be connected to the device via a network. Examples of the preceding network include, but are not limited to, the Internet, an intranet, a local area network, a mobile communication network, and a combination thereof.

The input apparatus 123 may be configured to receive inputted digital or character information and generate key signal input related to the user setting and function control of the device. The output apparatus 124 may include a display device such as a display screen.

The communication apparatus 125 may include a receiver and a sender. The communication apparatus 125 is configured to perform information transceiving communication under the control of the processor 121.

In an example embodiment, an embodiment of the present application further provides a storage medium including computer-executable instructions, where the computer-executable instructions are used for performing an information processing method when executed by a computer processor. The method is applied by a first communication node and includes the steps below.

First configuration information sent by a second communication node is received.

A correspondence between an LCID and a MAC CE type is determined.

Of course, in the storage medium including the computer-executable instructions, which is provided by the embodiment of the present application, the computer-executable instructions may implement not only operations in the preceding method but also related operations in the information processing method according to any embodiment of the present application.

In an example embodiment, an embodiment of the present application further provides a storage medium including computer-executable instructions, where the computer-executable instructions are used for performing an information processing method when executed by a computer processor. The method is applied by a second communication node and includes the steps below. First configuration information is sent to a first communication node.

An LCID is sent to the first communication node so that the first communication node determines, based on the LCID and the first configuration information, a MAC CE type corresponding to the LCID.

Of course, in the storage medium including the computer-executable instructions, which is provided by the embodiment of the present application, the computer-executable instructions may implement not only operations in the preceding method but also related operations in the information processing method according to any embodiment of the present application.

From the preceding description of embodiments, it is apparent to those skilled in the art that the present application may be implemented by use of software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the methods in the embodiments of the present application.

The preceding are only example embodiments of the present application and are not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information processing method, the method being applied by a first communication node and comprising:
receiving first configuration information sent by a second communication node; and
determining, based on the first configuration information, a correspondence between a logical channel identifier, LCID, and a media access control control element, MAC CE, type.

2. The method of claim 1, further comprising:
receiving an LCID sent by the second communication node; and
determining, based on the LCID and the first configuration information, a MAC CE type corresponding to the LCID.

3. The method of claim 2, before receiving the first configuration information sent by the second communication node, further comprising:
receiving second configuration information sent by the second communication node, wherein the second configuration information comprises first indication information for instructing the first communication node whether to use the correspondence between the LCID and the MAC CE type comprised in the first configuration information; and
in a case where the first indication information instructs the first communication node to use the correspondence between the LCID and the MAC CE type, determining the MAC CE type corresponding to the LCID by using the correspondence between the LCID and the MAC CE type comprised in the first configuration information.

4. The method of claim 3, before receiving the second configuration information sent by the second communication node, further comprising:
sending first capability information to the second communication node, wherein the first capability information comprises whether the first communication node supports a configuration of the correspondence between the LCID and the MAC CE type in the first configuration information; and
in a case where the first communication node supports the configuration of the correspondence between the LCID and the MAC CE type, determining the MAC CE type corresponding to the LCID by using the correspondence between the LCID and the MAC CE type in the first configuration information.

5. The method of claim 2, wherein the first configuration information comprises a MAC CE type corresponding to an LCID value; and
wherein determining, based on the LCID and the first configuration information, the MAC CE type corresponding to the LCID comprises:
determining, based on an LCID in a received media access control, MAC, subheader and the MAC CE type corresponding to the LCID value in the first configuration information, a MAC CE type corresponding to the LCID in the MAC subheader.

6. The method of claim 2, wherein the first configuration information comprises an LCID value corresponding to a MAC CE type under a radio resource configuration; and
wherein determining, based on the LCID and the first configuration information, the MAC CE type corresponding to the LCID comprises:
determining, based on the LCID and the LCID value corresponding to the MAC CE type under the radio resource configuration, the MAC CE type corresponding to the LCID.

7. The method of claim 2, wherein the first configuration information comprises a correspondence between an LCID and padding; and
wherein the method further comprises:
determining, based on the LCID and the correspondence between the LCID and the padding, whether a received media access control protocol data unit, MAC PDU, comprises the padding.

8. The method of claim 1, wherein a length of an LCID field is determined by the number of LCIDs configured for the first communication node.

9. The method of claim 1, wherein the MAC CE type comprises at least one of:
a recommended bit rate MAC CE;
a semi-persistent zero power channel state information reference signal, SP ZP CSI-RS, Resource Set Activation/Deactivation MAC CE;
a physical uplink control channel, PUCCH, spatial relation Activation/Deactivation MAC CE;
a semi-persistent sounding reference signal, SP SRS, Activation/Deactivation MAC CE;
a semi-persistent channel state information, SP CSI, reporting on PUCCH Activation/Deactivation MAC CE;
a transmission configuration indication, TCI, State Indication for user equipment, UE,-specific physical downlink control channel, PDCCH, MAC CE;
a TCI States Activation/Deactivation for UE-specific physical downlink shared channel, PDSCH, MAC CE;
an Aperiodic channel state information, CSI, Trigger State Subselection MAC CE;
an SP CSI-RS/CSI interference measurement, CSI-IM, Resource Set Activation/Deactivation MAC CE;
a Duplication Activation/Deactivation MAC CE;
a secondary cell, SCell, Activation/Deactivation MAC CE;
a Long discontinuous reception, DRX, Command MAC CE;
a DRX Command MAC CE;
a Timing Advance Command MAC CE;
a UE Contention Resolution Identity MAC CE;
a recommended bit rate query MAC CE;
a Multiple Entry power headroom report, PHR, MAC CE;
a Configured Grant Confirmation MAC CE;
a Single Entry PHR MAC CE;
a cell radio network temporary identifier, C-RNTI, MAC CE;
a Short Truncated buffer status report, BSR, MAC CE;
a Long Truncated BSR MAC CE;
a Short BSR MAC CE; or
a Long BSR MAC CE.

10. An information processing method, the method being applied by a second communication node and comprising:
sending first configuration information to a first communication node; and
sending a logical channel identifier, LCID, to the first communication node so that the first communication node determines, based on the LCID and the first configuration information, a media access control control element, MAC CE, type corresponding to the LCID.

11. An information processing apparatus, the apparatus being configured in a first communication node and comprising:
a receiving module, which is configured to receive first configuration information sent by a second communication node; and
a determination module, which is configured to determine, based on the first configuration information, a correspondence between a logical channel identifier, LCID, and a media access control control element, MAC CE, type.

12. An information processing apparatus, the apparatus being configured in a second communication node and comprising:
a sending module, which is configured to send first configuration information to a first communication node and send a logical channel identifier, LCID, to the first communication node so that the first communication node determines, based on the LCID and the first configuration information, a media access control control element, MAC CE, type corresponding to the LCID.

13. An information processing device, comprising:
at least one processor; and
a memory configured to store at least one program;
wherein the at least one program, when executed by the at least one processor, causes the at least one processor to perform the method of any one of claims 1 to 10.

14. A storage medium, which is configured to store a computer program which, when executed by a processor, causes the processor to perform the method of any one of claims 1 to 10.
